# EUROPÄISCHE PATENTSCHRIFT

(11) **EP 3 539 755 B1**
(45) Veröffentlichungstag und Bekanntmachung des Hinweises auf die Patenterteilung: **21.06.2023**
(21) Anmeldenummer: 19153251.4
(22) Anmeldetag: 23.01.2019
(51) Int. Cl.: B29C 65/00, B29C 65/02, B29C 65/36, B29C 43/36, B29C 65/16, B29C 65/08, B29C 65/34

(54) **VERFAHREN UND VORRICHTUNG ZUM THERMISCHEN FÜGEN THERMOPLASTISCHER FASERVERBUNDBAUTEILE**
METHOD AND APPARATUS FOR THERMALLY JOINING THERMOPLASTIC FIBRE COMPOSITE COMPONENTS
PROCÉDÉ ET DISPOSITIF DE JONCTION THERMIQUE DES COMPOSANTS THERMOPLASTIQUES COMPOSITES RENFORCÉS PAR DES FIBRES

(30) Priorität: 13.03.2018 DE 102018002011
(43) Veröffentlichungstag der Anmeldung: 18.09.2019
(73) Patentinhaber: Premium AEROTEC GmbH, 86179 Augsburg (DE)
(72) Erfinder: KUNTZ, Julian, 86179 Augsburg (DE); GEIPEL, Thomas, 86343 Königsbrunn (DE)
(74) Vertreter: LKGLOBAL Lorenz & Kopf Patentanwalt Attorney at Law PartG mbB

(56) Entgegenhaltungen:
- DE-A1- 1 908 987
- GB-A- 2 322 823
- US-A- 5 591 291
- US-A1- 2017 129 163
- US-B1- 9 610 654

## Beschreibung

Die vorliegende Erfindung betrifft ein Verfahren zum thermischen Fügen thermoplastischer Faserverbundbauteile sowie eine Vorrichtung zum thermischen Fügen thermoplastischer Faserverbundbauteile gemäß einem derartigen Verfahren.

Zum Verschweißen thermoplastischer Faserverbundbauteile existieren verschiedenste Ansätze. Die DE 10 2015 005 407 A1 beschreibt beispielsweise ein Verfahren zum Verschweißen von faserverstärkten Thermoplasten mittels Rührreibschweißen. Bei einem weiteren der Anmelderin intern bekannten Verfahren zum Verschweißen thermoplastischer Faserverbundbauteile wird eine Punktschweißung mit einem Schweißkopf vorgenommen, wobei der Schweißkopf selbst einen Anpressdruck auf die Schweißstelle ausübt und nach dem Schweißen an dem Schweißpunkt so lange verweilt, bis das Material wieder erstarrt. Bei einem noch weiteren der Anmelderin intern bekannten Verfahren zum thermischen Fügen thermoplastischer Faserverbundbauteile wird eine Anpressrolle nach dem Schweißkopf geführt, welche das Material exakt zum Zeitpunkt des Erstarrens zusammenpresst. Bei einem noch weiteren der Anmelderin intern bekannten Verfahren werden feste Klemm-/Pressformen aus Metall eingesetzt, die auf beiden Seiten exakt die Bauteilkontur abbilden.

Die US 9 610 654 B1 beschreibt eine Vorrichtung zum Verbinden von Bauteilen, wobei Induktionsspulen in elastomere Bleche eingebettet sind, welche relativ zu einem ersten und zweiten Verbundbauteil angeordnet sind und ein magnetisches Feld erzeugen, welches Wärme zum Fügen der ersten und zweiten Teile generiert.

Die US 2017/129163 beschreibt das induktive Schweißen von Verbundwerkstoffen unter teilweisem Vakuum.

Die US 5 591 291 A1 beschreibt ein Verbundmaterial samt Herstellung.

Die GB 2 322 823 A beschreibt eine Membran.

Die DE 19 08 987 A1 beschreibt eine Wärmeverformung.

Vor diesem Hintergrund liegt der vorliegenden Erfindung die Aufgabe zugrunde, ein verbessertes Verfahren und eine verbesserte Vorrichtung sowie eine verbesserte Abdeckung zum thermischen Fügen thermoplastischer Faserverbundbauteile bereitzustellen.

Erfindungsgemäß wird diese Aufgabe gelöst durch ein Verfahren mit den Merkmalen des Patentanspruchs 1, und/oder durch eine Vorrichtung mit den Merkmalen des Patentanspruchs 8.

Demgemäß ist vorgesehen:
- Ein Verfahren zum thermischen Fügen thermoplastischer Faserverbundbauteile, mit den folgenden Verfahrensschritten: Gemeinsames Abdecken zu fügender thermoplastischer Faserverbundbauteile zumindest im Bereich einer Fügezone mit einer zumindest abschnittsweise flexiblen Druckbeaufschlagungsanordnung; flächiges Druckbeaufschlagen der zu fügenden thermoplastischen Faserverbundbauteile mit der Druckbeaufschlagungsanordnung, so dass die Faserverbundbauteile zumindest in der Fügezone aneinander gedrückt werden; Verschweißen der Faserverbundbauteile in der Fügezone während der Druckbeaufschlagung; und Aufrechterhalten der Druckbeaufschlagung mit der Druckbeaufschlagungsanordnung bis zum Erstarren der Fügezone.
- Eine Vorrichtung zum thermischen Fügen thermoplastischer Faserverbundbauteile, insbesondere gemäß einem erfindungsgemäßen Verfahren, mit: Einer zumindest abschnittsweise flexiblen Druckbeaufschlagungsanordnung zum gemeinsamen Abdecken zu fügender thermoplastischer Faserverbundbauteile zumindest im Bereich einer Fügezone und Druckbeaufschlagen der zu fügenden thermoplastischen Faserverbundbauteile, so dass die zu fügenden Faserverbundbauteile zumindest in der Fügezone aneinander gedrückt werden; und einer Schweißeinrichtung zum Verschweißen der Faserverbundbauteile in der Fügezone, wobei die Druckbeaufschlagungsanordnung und die Schweißeinrichtung derart ausgebildet sind, dass die thermoplastischen Faserverbundbauteile in der Fügezone in einem druckbeaufschlagten Zustand verschweißbar und die Druckbeaufschlagung, insbesondere unabhängig von der Schweißeinrichtung, mit der Druckbeaufschlagungsanordnung bis zum Erstarren der Fügezone aufrechterhaltbar ist.

Die der vorliegenden Erfindung zugrunde liegende Idee besteht darin, eine flächige Verpressung der zu fügenden Faserverbundbauteile mit einer zumindest abschnittweise flexiblen Druckbeaufschlagungsanordnung vorzusehen, welche während und insbesondere auch noch nach dem Schweißen unabhängig von einer Schweißeinrichtung bzw. einem Schweißprozess aufrecht erhalten bleibt. Beim Verschweißen von faserverstärkten thermoplastischen Kunststoffen können somit Fügepartner mit der Fügefläche homogen aufeinander gepresst werden. Zudem wird einer Tendenz der Faserlagen, bei erweichender Matrix in Dickenrichtung aufzugehen, wirksam entgegengewirkt. Somit wird verhindert, dass hinzukommendes Volumen mit Luft gefüllt wird, so dass Porenbildung vermieden wird.

Erfindungsgemäß sind die Fügepartner nicht nur im Moment der Wärmeeinbringung zum Aufschmelzen der Matrix verpresst. Vielmehr wird auch danach die Verpressung noch aufrecht erhalten, bis die Matrix der Faserverbundbauteile wieder abgekühlt und fest wird bzw. erstarrt. Besonders vorteilhaft liegt der Anpressdruck erfindungsgemäß ohne große Anlagen und ohne feste Klemmformen auch noch nach dem Schweißen dauerhaft bzw. statisch an. Ein Schweißkopf kann daher direkt nach dem Aufheizen des Materials weiterfahren, da er während des Abkühlprozesses nicht mehr benötigt wird.

Die Druckbeaufschlagungseinrichtung weist dazu vorzugsweise eine flexible Abdeckung auf, welche bei Druckbeaufschlagung einen Druck gleichmäßig verteilt an die Fügezone weitergibt. Diese flexible Abdeckung kann als flexible Membran oder flexible Form ausgebildet sein. Eine solche Abdeckung kann einseitig oder beidseitig an der Fügezone vorgesehen werden.

Insbesondere handelt es sich bei einer Abdeckung für ein Widerstandsschweißverfahren um eine Abdeckung, welche normal zu ihrer Hauptflächenausdehnung, d. h. ich ihrer Dickenrichtung, elektrisch leitfähig und in ihren Hauptflächenausdehnungsrichtungen, d. h. parallel zu ihrer Oberfläche, isolierend ausgebildet ist. Weiterhin denkbar sind für induktive Schweißverfahren für magnetische Felder durchlässige oder für Laserstrahlschweißverfahren für Laserstrahlen transparente oder für Ultraschallschweißverfahren für Ultraschall leitende Abdeckungen. Die flexible Abdeckung ist derart ausgebildet, ein Verschweißen im durch die Abdeckung druckbeaufschlagten Zustand der Fügezone zu erlauben und den Druck anschließend unabhängig von einer Schweißeinrichtung zu halten. Es werden somit keine festen Klemmformen benötigt, welche in der Regel genau passen müssen und bei welchen bei Toleranzabweichungen des Bauteils oder bei Durchbiegung der Klemmform der Druck nicht gleichmäßig anliegt und die zudem für jedes Bauteil spezifisch angefertigt werden müssen. Da solche Formen die über die ganze Länge der Fügezone aufgebrachten Druckkräfte alle um das Bauteil herumleiten müssten und dafür eine hohe Steifigkeit benötigen, wären sie teilweise sehr massiv und unhandlich. Erfindungsgemäß wird somit die Handhabung einer Druckbeaufschlagungsanordnung verbessert, insbesondere zum Schweißen an schwer zugänglichen Stellen, beispielsweise für Anwendungen bei der Flugzeugmontage.

Unter dem Erstarren der Fügezone ist ein zumindest überwiegendes Erstarren der thermoplastischen Matrix der zu fügenden thermoplastischen Faserverbundbauteile zu verstehen. Beispielsweise wird die Druckbeaufschlagung solange aufrecht erhalten, bis die Temperatur der Fügezone unter die Glasübergangstemperatur des Matrixwerkstoffs sinkt.

Unter flächigem Druckbeaufschlagen ist vorzugsweise ein Druckbeaufschlagen in einem Flächenbereich zu verstehen, der größer, vorzugsweise um ein Vielfaches größer als eine Wärmeeinflusszone um eine herzustellende Schweißnaht ist. Vorzugsweise handelt es sich um einen über die Fügezone hinausgehenden Flächenabschnitt der zu fügenden Bauteile. Durch die Flexibilität der Druckbeaufschlagungsanordnung, welche vorzugsweise zumindest im Bereich der Fügezone vorgesehen ist, verteilt sich der aufgebrachte Druck gelichmäßig über die Fläche der Fügezone. Eine dementsprechende zumindest abschnittsweise flexible Druckbeaufschlagungsanordnung kann beispielsweise zur flächigen Druckbeaufschlagung mittels Vakuum oder Magnetismus ausgebildet sein.

Unter der Fügezone ist ein stoffschlüssig zu verbindender Bereich der Faserverbundbauteile zu verstehen. Insbesondere kann es sich dabei um einen Stoßbereich, beispielsweise einen Überlappstoßbereich, der zu fügenden Bauteile handeln.

Die zu fügenden thermoplastischen Faserverbundbauteile enthalten zumindest ein thermoplastisches Faserverbundbauteil und ein damit verschweißbares weiteres Bauteil. Es kann sich bei den zu fügenden thermoplastischen Faserverbundbauteilen auch um mehr als zwei Bauteile handeln, beispielsweise um drei oder mehr Bauteile.

Vorteilhafte Ausgestaltungen und Weiterbildungen ergeben sich aus den weiteren Unteransprüchen sowie aus der Beschreibung unter Bezugnahme auf die Figuren.

Erfindungsgemäß enthält die Druckbeaufschlagungsanordnung elektrische Kontakte und die Faserverbundbauteile werden mittels Widerstandsschweißen über die elektrischen Kontakte verschweißt.

Die elektrischen Kontakte stellen eine elektrische Verbindung zwischen einer Innenseite und einer Außenseite der Druckbeaufschlagungsanordnung her. Beispielweise können somit Schweißelektroden einer Schweißeinrichtung von außen an die elektrischen Kontakte angelegt werden, wobei die Kontakte einen Schweißstrom in die Fügezone weiterleiten. Zur Minimierung des Widerstandes kann eine Kontaktierungshilfe, beispielsweise eine Kontaktpaste, zwischen den Faserverbundbauteilen und den Kontakten vorgesehen werden. Auf diese Weise lässt sich ein Schweißprozess während einer Druckbeaufschlagung durch die Druckbeaufschlagungsanordnung vornehmen.

Gemäß einer Ausführungsform sind die elektrischen Kontakte entlang der Fügezone angeordnet und das Verschweißen wird kontinuierlich oder abschnittsweise entlang der Fügezone durch lokales Anlegen eines Schweißstroms an die Kontakte vorgenommen. An der Stelle des anliegenden Schweißstroms, welche vorzugsweise entlang der Fügezone mit einer vorbestimmten Vorschubgeschwindigkeit fortschreitet, wird die Fügezone lokal an- und/oder aufgeschmolzen und unter dem Druck der Druckbeaufschlagungsanordnung verschweißt. Es handelt sich somit bei dem Verschweißen um einen fortschreitenden Prozess, insbesondere eine Linienschweißung, wobei der mit der Druckbeaufschlagungsanordnung aufgebrachte Druck während des Prozesses, insbesondere über die gesamte Fügezone gleichmäßig verteilt, stationär aufrechterhalten bleibt. Vorteilhaft kann somit ein fortschreitender Schweißprozess unter stationären Druckverhältnissen vorgenommen werden.

Erfindungsgemäß sind die elektrischen Kontakte in voneinander isolierte Kontaktabschnitte unterteilt, wobei ein Schweißstrom an beiden Seiten der Fügezone an jeweils gegenüberliegenden Kontaktabschnitten angelegt wird und das Verschwei-ßen der Faserverbundbauteile mittels eines Stromflusses in Dickenrichtung durch die Faserverbundbauteile vorgenommen wird.

Auf diese Weise kann sich der Stromfluss vorteilhaft nicht seitlich in bzw. über andere Segmente verteilen, sodass ein zielgerichteter Wärmeeintrag zum Verschwei-ßen ermöglicht ist. Das Verschweißen wird in diesem Fall segment- bzw. abschnittsweise entlang der Fügezone vorgenommen.

Gemäß einer Ausführungsform wird ein leitfähiger Schweißzusatzwerkstoff zwischen die zu fügenden thermoplastischer Faserverbundbauteile in der Fügezone eingebracht und mit den elektrischen Kontakten verbunden. Das Verschweißen wird entsprechend durch Anlegen eines Schweißstroms an den Schweißzusatzwerkstoff vorgenommen. Bei dem Schweißzusatzwerkstoff kann es sich beispielsweise um eine Thermoplast-Prepreglage handeln. Diese ist hinsichtlich ihres elektrischen Widerstands derart ausgelegt, dass ihre Leitfähigkeit hoch genug ist um den Schweißstrom zu leiten und dabei eine ausreichende Widerstandswärme zum Verschweißen der Faserverbundwerkstoffe entsteht. Ferner ist der Schweißzusatzwerkstoff ausgebildet um sich problemlos in der Fügezone in das Material der Faserverbundbauteile einzufügen, sodass nach dem thermischen Fügen eine stabile und feste Verbindung der Faserverbundbauteile geschaffen ist. Beispielsweise kann er dazu eine ähnliche Faserstruktur wie die Faserverbundbauteile aufweisen. Denkbar ist ferner, den Schweißzusatzwerkstoff in delaminationsverhindernder Weise auszugestalten, beispielsweise mit mechanischen Koppelelementen, die während des Verschweißen in das Material der Faserverbundbauteile eingreifen können. Somit wird eine besonders feste Verbindung geschaffen.

Gemäß einer Weiterbildung sind die den Schweißzusatzwerkstoff kontaktierenden Elektroden jeweils an den längsseitigen Enden, d.h. bei einer länglichen Fügezone an den jeweiligen kurzen Seiten der Fügezone, angeordnet. Es sind aber auch Anordnungen an den langen Seiten der Fügezone möglich, je nach Konfiguration der Druckbeaufschlagungsanordnung.

Bei einem Überlappstoß der zu fügenden Faserverbundbauteile kann der Schweißzusatzwerkstoff an den langen Seiten der Fügezone über die Fügezone bzw. über den Überlapp hinaus weitergeführt sein. Auf diese Weise wird ein zuverlässiges Aufschmelzen der Bauteilkanten gewährleistet. Somit wird eine durchgehende Verschweißung erreicht und vorteilhaft eine Kerbe an den Anschlüssen der überlappenden Bauteilkanten vermieden und somit die Festigkeit verbessert.

Gemäß einer Weiterbildung ist im Anschluss an den über den Überlapp hinaus weitergeführten Zusatzwerkstoff ein Trennmittel, beispielsweise ein Klebeband mit trennender Beschichtung, vorgesehen. Auf diese Weise wird ein durch den Zusatzwerkstoff über die Fügezone hinaus aufgeschmolzener Bereich der zu fügenden Faserverbundbauteile definiert abgeschlossen, was insbesondere das Nahtbild verbessert.

Bei einer Ausführungsform ist der Schweißzusatzwerkstoff, außer an den elektrischen Kontaktierungsflächen zur Einleitung des Schweißstroms, von einer elektrisch nicht leitfähigen Schicht umgeben. Auf diese Weise wird die gewünschte Stromführung innerhalb des Schweißzusatzwerkstoffs sicher gestellt. Die nicht leitfähige Schicht wird dabei mit verschweißt und ist derart ausgebildet, dass sie auch beim Aufschmelzen der Matrix der zu fügenden Faserverbundbauteile nicht leitfähig wird. Als Material kommen beispielsweise Glasfaser-Thermoplast-Prepreglagen in Frage. Insbesondere steht die nicht leitfähige Schicht etwas über die Ränder des leitfähigen Schweißzusatzwerkstoffs hinaus, um auch an den Rändern eine sichere Isolierung bereitzustellen.

Gemäß einer Ausführungsform werden an den Überlapp angrenzend nicht elektrisch leitfähige Hilfseinlagen, vorzugsweise an beiden Seiten des Überlappsto-ßes, im Bereich der Bauteilkanten zwischen dem jeweiligen Bauteil und der Druckbeaufschlagungsanordnung aufgebracht. Der Schweißzusatzwerkstoff kann dabei am Rand der Fügezone teilweise über die Hilfseinlagen geführt werden. Die Druckbeaufschlagung wird vorzugsweise auch auf die Hilfseinlagen aufgebracht. Die Hilfseinlagen weisen dabei vorzugsweise eine gleiche thermische Leitfähigkeit wie der Werkstoff der Faserverbundbauteile auf. Auf diese Weise wird die Schweißwärme bis an die Bauteilkanten geführt, was eine gewünschte vollständige Schweißung der Kante ermöglicht. Die Hilfseinlage kann dazu insbesondere aus dem gleichen Werkstoff wie die Faserverbundbauteile gefertigt, jedoch mit einem nicht leitfähigen Medium, beispielsweise einer Folie, umschlossen sein.

Gemäß einer Ausführungsform wird die Druckbeaufschlagungsanordnung als Magnetanordnung vorgesehen. Das Druckbeaufschlagen umfasst in diesem Fall das Anlegen magnetischer Kräfte an die Faserverbundbauteile. Vorteilhaft stellen magnetische Kräfte eine kontinuierliche Anziehung für die Druckbeaufschlagungsanordnung bereit, sodass das druckbeaufschlagte Verschweißen und Erstarren unter konstanten Druckbedingungen vorgenommen werden kann. Die Magnetanordnung kann bei einer Ausführungsform Permanentmagnete enthalten. Alternativ oder zusätzlich kann die Magnetanordnung Elektromagnete enthalten. Die Magnete können bei einer Weiterbildung zusätzlich auch als leitende Elemente zur Kontaktierung ausgebildet sein bzw. vorgesehen werden.

Gemäß einer Ausführungsform ist die Druckbeaufschlagungsanordnung als Vakuumanordnung vorgesehen. Das Druckbeaufschlagen umfasst entsprechend das Anlegen eines Unterdrucks. Die Druckbeaufschlagungsanordnung enthält in diesem Fall eine flexible luftdichte Abdeckung, unter welcher der Unterdruck generiert wird. Dazu kann beispielsweise ein Absaugstutzen an der Vakuumanordnung vorgesehen sein, welcher mit einer Vakuumpumpe gekoppelt ist. Vorteilhaft wird auf diese Weise eine gleichmäßige Druckbeaufschlagung über die gesamte Fügezone erreicht. Ferner können auf diese Weise bei Bedarf auch die Bauteile als Ganzes abgedeckt und auf diese Weise einerseits zum Verschweißen fixiert und andererseits aneinandergepresst werden. Bevorzugt wird die Vakuumvorrichtung jedoch nur lokal um die Fügezone vorgesehen. Da das Material außerhalb der Fügezone fest bleibt, kann somit vorteilhaft auf dem Bauteil selbst abgedichtet werden und damit der Aufwand und die Menge der Hilfsstoffe deutlich reduziert werden.

Eine flexible Abdeckung der Vakuumanordnung kann bei einer Ausführungsform einseitig in Kombination mit einer an der anderen gegenüberliegenden Seite angeordneten festen Form vorgesehen sein.

Bei einer weiteren Ausführungsform kann die flexible Abdeckung der Vakuumanordnung zweiseitig mit zwei gegenüberliegend angeordneten Abdeckungen an den zu fügenden Faserverbundbauteilen vorgesehen sein.

Eine Vakuumanordnung und eine Magnetanordnung sind auch miteinander kombinierbar. Somit wird vorteilhaft der Druck erhöht und kann, insbesondere in der Fügezone, lokal mit Magneten verstärkt werden.

Gemäß einer Ausführungsform weist die Vakuumanordnung eine flexible Vakuummembran auf, welche eine Oberseite der zu fügenden Faserverbundbauteile abdeckt. Optional oder zusätzlich kann die flexible Vakuummembran auch eine Unterseite der zu fügenden Faserverbundbauteile abdecken. Die Vakuummembran bildet hier zumindest einen Teil der Abdeckung der Druckbeaufschlagungsanordnung. Mittels Vakuum lässt sich vorteilhaft eine gleichmäßiger Druck auf die Faserverbundbauteile aufbringen.

Bei einer Ausführungsform wird beispielsweise ein Vakuum-Foliensack eingesetzt, dessen Zwischenraum mit einer Vakuumpumpe evakuiert wird, um die Fügepartner durch den Atmosphärendruck aufeinander zu pressen. Der flexible Vakuumsack bringt den Anpressdruck homogen verteilt auf und kann leicht an unterschiedlichste Bauteilformen angepasst werden. Bauteiltoleranzen können somit vorteilhaftleichter ausgeglichen werden. Bei einer weiteren Ausführungsform können beispielsweise auch zwei Foliensäcke eingesetzt werden, um auf beiden Bauteilseiten eine entsprechende Abdeckung vorzusehen.

Gemäß einer Ausführungsform umfasst das gemeinsame Abdecken der zu fügenden Faserverbundbauteile mit der Vakuumanordnung ein Aufbringen zumindest eines elektrisch leitenden Elements als elektrischen Kontakt in der Fügezone. Die Vakuummembran wird ferner mit dem elektrisch leitenden Element luftdicht verbunden. Auf diese Weise kann das elektrisch leitende Element exakt an den zu verschweißenden Abschnitten, insbesondere einem Überlappbereich, direkt auf die Faserverbundbauteile aufgebracht werden, was eine hohe Positioniergenauigkeit ermöglicht. Das luftdichte Verbinden mit der Vakuummembran kann insbesondere im Anschluss an das Aufbringen des elektrisch leitenden Elements erfolgen.

Denkbar ist bei einer Ausführungsform weiterhin, das elektrisch leitende Element zunächst mit der Vakuummembran luftdicht zu verbinden und anschließend in der Fügezone aufzubringen.

Gemäß einer vorteilhaften Weiterbildung wird eine Mehrzahl elektrisch leitender Elemente als Kontaktabschnitte vorgesehen, welche jeweils voneinander elektrisch getrennt und luftdicht verbunden werden. Auf diesen Weise sind in voneinander isolierte Abschnitte unterteilte elektrische Kontakte mit hoher Positioniergenauigkeit realisierbar. Mit in Abschnitte unterteilten Kontakten kann der Stromfluss durch die Fügezone vorteilhaft lokal gesteuert werden. Bei den elektrisch leitenden Elementen kann es sich beispielsweise um Metallfolienabschnitte oder luftundurchlässige leitfähige Textilabschnitte handeln. Die voneinander elektrisch getrennte luftdichte Verbindung kann beispielsweise über ein isolierendes Klebeband vorgenommen werden. Auf diese Weise ist einerseits das abschnittsweise Verschweißen in einem kontinuierlichen Prozess und darüber hinaus aber auch die Anwendung von das Verschweißen vorbereitenden, unterstützenden oder durchführenden Aufheizverfahren, die auf Stromleitung beruhen, ermöglicht.

Gemäß einer beispielhaften Ausführungsform kann eine stückweise Verwendung von elektrisch leitfähiger Metallfolie als Kontaktabschnitte für die Vakuummembran bzw. einen Vakuumsack vorgesehen sein. Um ein Widerstandsschweißen mittels Stromfluss durchführen zu können, wird im Bereich der Schweißnaht bzw. in den Bereichen, wo der Strom eingeleitet werden soll, eine elektrisch isolierende Folie der Vakuummembran unterbrochen und mit einer elektrisch leitfähigen Metallfolie ersetzt, die damit luftdicht verbunden wird. Somit ist eine abschnittsweise Leitfähigkeit realisierbar.

Gemäß einer weiteren Ausführungsform ist eine als Abdeckung der Druckbeaufschlagungsanordnung vorgesehene Membran, die als Vakuummembran einer Vakuumanordnung ausgebildet ist, für elektrischen Strom nur in Dickenrichtung und nicht in Flächenrichtung leitfähig ausgebildet. Die elektrische Leitfähigkeit ist somit richtungsabhängig. Mit einer derartigen Ausführungsform ist der Vorteil verbunden, dass sich der Aufbau einer Vakuumanordnung stark vereinfacht. Insbesondere kann somit ein gesamter Vakuumsack aus dem gleichen Material bestehen, ohne dass die Gefahr von Kurzschlüssen besteht. Beispielsweise kann es sich bei der Membran um eine in Dickenrichtung unidirektionalen leitfähige Folie oder ein unidirektional leitfähiges Textil handeln. Insbesondere kann es sich um eine Kunststofffolie mit in Stromleitungsrichtung eingebetteten Metallpartikeln, eine Silikonform mit in Stromleitungsrichtung eingebetteten Metallstäbchen oder um ein Kunststofffasertextil mit in Stromleitungsrichtung eingebrachten Metallfäden handeln.

Gemäß einer Ausführungsform werden die Faserverbundbauteile durch von außerhalb der Vakuumanordnung erregte Induktion verschweißt. Insbesondere wird dazu eine Kühlung der Vakuumanordnung, insbesondere eine äußere Kühlung, beispielsweise durch Druckluft, vorgesehen, um die Vakuumanordnung nicht zu überhitzen bzw. zu beschädigen. Vorteilhaft können auf diese Weise von außerhalb der Vakuumanordnung Schweißverläufe frei gestaltet werden ohne dass dies zuvor spezieller Vorbereitungsmaßnahmen bedarf. Die Vakuumanordnung kann dabei, abgesehen von einer gewissen Hitzebeständigkeit, ohne spezielle Eigenschaften vorgesehen werden. Beispielsweise kann es sich bei einer Abdeckung der Vakuumanordnung um eine Kunststofffolie handeln, welche von außen mittels darauf blasender Druckluftdüsen gekühlt wird.

Gemäß einer weiteren Ausführungsform werden die Faserverbundbauteile durch von außerhalb der Vakuumanordnung erregtem und über die Vakuumanordnung übertragenen Ultraschall verschweißt. Insbesondere wird dazu eine Sonotrode auf der Vakuumanordnung eingesetzt. Vorzugsweise ist auch eine Kühlung der Vakuumanordnung vorgesehen. Insbesondere kann es sich um eine äußere Kühlung, beispielsweise durch Druckluft, handeln. Insbesondere im Falle einer Vakuummembran als Vakuumanordnung kann so ein Ankleben vermieden werden. Die Vakuummembran und die Sonotrode sind dabei derart ausgebildet, dass die Vakuummembran den Ultraschall in die Fügezone weitergibt bzw. leitet. Im Falle einer als flexible Form, beispielsweise einer Silikonform, ausgebildeten Vakuumanordnung kann der Ultraschall von der Sonotrode über in die Form eingelassene Metallstäbe in der Fügezone auf die Bauteiloberfläche übertragen werden. Die Metallstäbe können bei einer Ausführungsform auch zusätzlich als Magnete einer Magnetanordnung ausgebildet sein.

Gemäß einer weiteren Ausführungsform wird die Vakuumanordnung für eine vorbestimmte Laserstrahlung transparent vorgesehen. Die Faserverbundbauteile werden mittels eines von außerhalb der Vakuumanordnung eingebrachten Laserstrahls verschweißt. Insbesondere kann auch hierbei eine Kühlung der Vakuumanordnung vorgesehen werden, beispielsweise mittels Druckluft. Für die Vakuumanordnung kann dazu beispielhaft eine für die verwendeten Laserstrahlung, insbesondere für vorbestimmte Wellenlängen, zumindest im Wesentlichen transparente Vakuumfolie eingesetzt werden.

Gemäß einer Ausführungsform einer Abdeckung kann diese eine Vakuumanordnung aufweisen, wobei mittels Unterdruck eine Druckbeaufschlagung eines Bauteils ermöglicht ist.

Bei einer weiteren Ausführungsform kann die Abdeckung eine Magnetanordnung enthalten, welche integrierte Magnete aufweist. Somit ist mittels magnetischer Anziehung eine Druckbeaufschlagung der zu fügenden Faserverbundbauteile ermöglicht.

Bei einer Weiterbildung können sich Magnete der Magnetanordnung im Bereich der Fügezone in Dickenrichtung durch ein Unterteil und/oder ein Oberteil der Abdeckung hindurch erstrecken. In diesem Fall können die Magnete zusätzlich als elektrische Kontakte zum Leiten eines Schweißstroms zum Verschweißen der Faserverbundbauteile ausgebildet und vorgesehen sein. Vorteilhaft werden somit zum Widerstandsschweißen keine zusätzlichen elektrisch leitfähigen Elemente mehr benötigt.

Gemäß einer Ausführungsform ist die Abdeckung zumindest im Wesentlichen luftdicht ausgebildet. Sie eignet sich somit für eine Vakuumanordnung.

Bei einer weiteren Ausführungsform ist die Abdeckung luftdurchlässig und für thermoplastische Polymerschmelze undurchlässig ausgebildet. Sie ist somit semipermeabel und eignet sich insbesondere für einen direkten Kontakt mit der Fügezone, wenn eine äußere Randschicht der Faserverbundbauteile bei dem Schweißprozess mit aufgeschmolzen wird.

Bei einer noch weiteren Ausführungsform ist die Abdeckung aus zwei Schichten aufgebaut, wobei eine erste Schicht luftdicht und eine zweite Schicht luftdurchlässig und für thermoplastische Polymerschmelze undurchlässig ausgebildet ist. Vorteilhaft werden auf diese Weise die Eigenschaften beider Schichten synergetisch genutzt, denn diese Anordnung erlaubt zusätzlich ein Absaugen etwaiger erst beim Schweißprozess freigesetzter Gase. Damit kann die Porosität im Schweißbereich zusätzlich vermieden und so die Fügequalität weiter verbessert werden.

Gemäß einer Ausführungsform kann die Abdeckung eine flexible Form, beispielsweise eine Silikonform, mit integrierten leitenden Elementen aufweisen. Alternativ oder zusätzlich kann die Abdeckung eine Metall- und/oder Kunststofffolie aufweisen. Weiterhin alternativ oder zusätzlich kann die Abdeckung ein Metall- und/oder Kunststofftextil aufweisen. Auf diese Weise sind vorteilhaft die in Dickenrichtung leitenden und in Hauptausdehnungsrichtung isolierenden Eigenschaften der Abdeckung erreichbar.

Gemäß einer Ausführungsform enthält die Abdeckung einem Multimaterialmix aus leitfähigen und nicht leitfähigen Materialien, wobei die leitfähigen Materialien die beiden Oberflächen der Abdeckung miteinander elektrisch verbinden zumindest überwiegend voneinander beabstandet sind. Insbesondere sind sie in den Hauptflächenausdehnungsrichtungen der Abdeckung beabstandet. Auf diese Weise lassen sich die leitenden und isolierenden Eigenschaften der Materialien zur Bereitstellung einer richtungsabhängigen Leitfähigkeit nutzen. Beispielsweise kann es sich um eine Kunststofffolie mit eingebetteten Metallpartikeln, eine Silikonform mit eingebetteten Metallstäben und/oder um ein Kunststofffasertextil mit eingebrachten Metallfäden handeln.

Gemäß einer Ausführungsform einer Vorrichtung zum thermischen Fügen thermoplastischer Faserverbundbauteile ist die Schweißeinrichtung als Widerstandsschweißeinrichtung ausgebildet, wobei die Druckbeaufschlagungsanordnung ein Oberteil und/oder ein Unterteil aufweist, welches mit einer Abdeckung gebildet ist. Die Abdeckung ist in diesem Fall zur Übertragung eines Schweißstroms der Schweißeinrichtung in die Fügezone ausgebildet. Vorteilhaft ist somit ein Verschweißen in einem kontinuierlichen Prozess unabhängig von der Druckbeaufschlagung ermöglicht und dabei ein Schweißstromfluss vorteilhaft durch die Positionierung von Schweißelektroden an der Abdeckung steuerbar.

Bei einer Ausführungsform einer Vorrichtung zum thermischen Fügen thermoplastischer Faserverbundbauteile ist die Schweißeinrichtung beispielsweise als Schweißquelle mit beweglichen Elektroden ausgebildet. Beispielsweise können die Elektroden Rollen oder Bürsten aufweisen, die für eine bewegte bzw. schleifende Kontaktierung ausgebildet sind. Auf diese Weise ist eine Linienschweißung entlang der elektrischen Kontakte der Druckbeaufschlagungsanordnung ermöglicht.

Gemäß einer Ausführungsform kann die Schweißeinrichtung als Schweißquelle mit ortsfesten Elektroden ausgebildet sein. In diesem Fall ist vorzugsweise ein Schweißzusatzwerkstoff in die Fügezone eingebracht, an welchem ein Schweißstrom angelegt wird. Eine Vakuummembran oder luftdichte Form der Druckbeaufschlagungsanordnung kann in diesem Fall abseits der Elektroden ohne elektrische Leitfähigkeit ausgebildet sein. Im Bereich der Elektroden ist die Vakuummembran oder luftdichte Form der Druckbeaufschlagungsanordnung dabei elektrisch leitfähig ausgebildet.

Gemäß einer Ausführungsform ist die Schweißeinrichtung als bewegliche Induktionsquelle ausgebildet. Diese ist derart ausgelegt, dass die Faserverbundbauteile durch die Druckbeaufschlagungseinrichtung hindurch induktiv verschweißt werden können. Vorzugsweise ist in diesem Fall zusätzlich eine Kühlung der Druckbeaufschlagungseinrichtung vorgesehen, beispielsweise mittels Druckluft.

Gemäß einer Ausführungsform ist die Schweißeinrichtung als bewegliche Laserstrahlquelle ausgebildet. Die Druckbeaufschlagungseinrichtung ist in diesem Fall für die Laserstrahlung der Laserstrahlquelle, zumindest im Wesentlichen, transparent vorgesehen und vorzugsweise zusätzlich gekühlt. Die Faserverbundbauteile können somit durch die Druckbeaufschlagungseinrichtung hindurch mit einem Laserstrahl verschweißt werden.

Gemäß einer Ausführungsform ist die Schweißeinrichtung als bewegliche Ultraschallquelle ausgebildet. Diese weist insbesondere eine Sonotrode auf. Die Sonotrode und die Druckbeaufschlagungseinrichtung sind dabei derart ausgelegt, dass die Faserverbundbauteile durch die Druckbeaufschlagungseinrichtung hindurch mit Ultraschall verschweißt werden können. Vorzugsweise ist dazu eine Kühlung der Druckbeaufschlagungseinrichtung vorgesehen, beispielsweise mittels Druckluft.

Die obigen Ausgestaltungen und Weiterbildungen lassen sich, sofern sinnvoll, beliebig miteinander kombinieren. Insbesondere sind sämtliche Merkmale des Verfahrens zum thermischen Fügen thermoplastischer Faserverbundbauteile auf die Vorrichtung zum thermischen Fügen thermoplastischer Faserverbundbauteile übertragbar, und umgekehrt. Darüber hinaus sind sämtliche Merkmale der Abdeckung für eine Druckbeaufschlagungseinrichtung zum thermischen Fügen thermoplastischer Faserverbundbauteile sowohl auf das Verfahren als auch auf die Vorrichtung übertragbar.

Die vorliegende Erfindung wird nachfolgend anhand der in den schematischen Figuren angegebenen Ausführungsbeispiele näher erläutert. Es zeigen dabei:
- Fig. 1: eine Querschnittansicht einer Vorrichtung zum thermischen Fügen thermoplastischer Faserverbundbauteile gemäß einer Ausführungsform;
- Fig. 2: eine Längsschnittansicht der Vorrichtung nach Fig. 1;
- Fig. 3: eine Längsschnittansicht einer Vorrichtung zum thermischen Fügen thermoplastischer Faserverbundbauteile gemäß einer weiteren Ausführungsform;
- Fig. 4: eine Draufsicht auf die Vorrichtung nach Fig. 3;
- Fig. 5: eine Querschnittansicht einer Vorrichtung zum thermischen Fügen thermoplastischer Faserverbundbauteile gemäß einer weiteren Ausführungsform;
- Fig. 6: eine Längsschnittansicht der Vorrichtung nach Fig. 5;
- Fig. 7: eine Draufsicht auf die Vorrichtung nach Fig. 5 und 6;
- Fig. 8: eine Querschnittansicht einer Vorrichtung zum thermischen Fügen thermoplastischer Faserverbundbauteile gemäß einer weiteren Ausführungsform;
- Fig. 9: eine Längsschnittansicht einer Vorrichtung zum thermischen Fügen thermoplastischer Faserverbundbauteile gemäß einer weiteren Ausführungsform;
- Fig. 10: eine Längsschnittansicht einer abgewandelten Vorrichtung zum thermischen Fügen thermoplastischer Faserverbundbauteile;
- Fig. 11: eine Längsschnittansicht einer weiteren abgewandelten Vorrichtung zum thermischen Fügen thermoplastischer Faserverbundbauteile;
- Fig. 12: eine Längsschnittansicht einer Vorrichtung zum thermischen Fügen thermoplastischer Faserverbundbauteile gemäß einer weiteren Ausführungsform;
- Fig. 13: eine Längsschnittansicht einer abgewandelten Vorrichtung zum thermischen Fügen thermoplastischer Faserverbundbauteile;
- Fig. 14: eine Querschnittansicht einer Vorrichtung zum thermischen Fügen thermoplastischer Faserverbundbauteile gemäß einer weiteren Ausführungsform;
- Fig. 15: eine Querschnittansicht einer Vorrichtung zum thermischen Fügen thermoplastischer Faserverbundbauteile gemäß einer weiteren Ausführungsform;
- Fig. 16: ein Ausschnitt einer Querschnittansicht einer Abwandlung der Ausführungsform gemäß Fig. 15;
- Fig. 17: eine Längsschnittansicht der Vorrichtung nach Fig. 15;
- Fig. 18: eine Draufsicht auf die Vorrichtung nach Fig. 17;
- Fig. 19: eine Querschnittansicht einer Vorrichtung zum thermischen Fügen thermoplastischer Faserverbundbauteile gemäß einer weiteren Ausführungsform;
- Fig. 20: eine Draufsicht auf die Vorrichtung nach Fig. 19;
- Fig. 21: eine Längsschnittansicht einer Vorrichtung zum thermischen Fügen thermoplastischer Faserverbundbauteile gemäß einer weiteren Ausführungsform;
- Fig. 22: eine Längsschnittansicht einer abgewandelten Vorrichtung zum thermischen Fügen thermoplastischer Faserverbundbauteile;
- Fig. 23: eine Längsschnittansicht einer weiteren abgewandelten Vorrichtung zum thermischen Fügen thermoplastischer Faserverbundbauteile;
- Fig. 24: eine Querschnittansicht einer Vorrichtung gemäß Fig. 22 oder Fig. 23;
- Fig. 25: eine Querschnittansicht einer nochmals abgewandelten Vorrichtung zum thermischen Fügen thermoplastischer Faserverbundbauteile; und
- Fig. 26: eine Querschnittansicht einer Vorrichtung zum thermischen Fügen thermoplastischer Faserverbundbauteile gemäß einer weiteren Ausführungsform.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

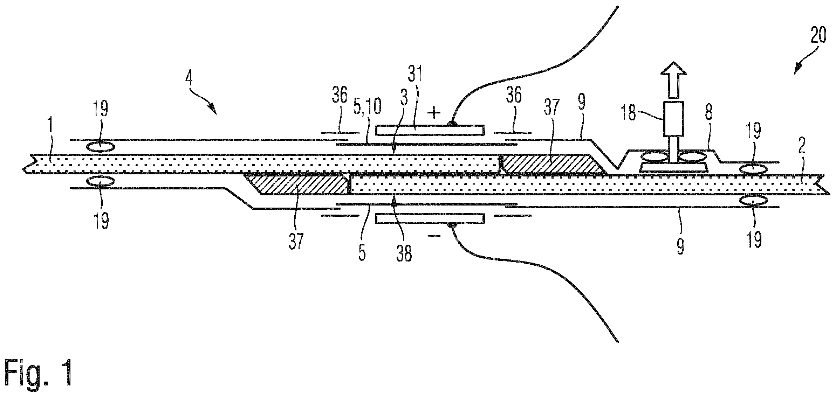

Fig. 1 zeigt eine Querschnittansicht einer Vorrichtung 20 zum thermischen Fügen thermoplastischer Faserverbundbauteile 1, 2 gemäß einer Ausführungsform.

Die Vorrichtung 20 weist eine Druckbeaufschlagungsanordnung 4 und eine Schweißeinrichtung 31 auf.

Die Druckbeaufschlagungsanordnung 4 ist hier als Vakuumanordnung 8 ausgebildet. Diese weist eine Vakuummembran 9, einen zum Anschluss an eine Vakuumquelle, beispielsweise einer Vakuumpumpe, ausgebildeten Absaugstutzen 18 sowie Dichtelemente 19 zur Abdichtung der Vakuummembran 9 gegenüber der Umgebung auf.

Die zu fügenden thermoplastischen Faserverbundbauteile 1 und 2 sind in einem Überlappstoß angeordnet. Ferner sind im Bereich einer in dem Überlappbereich 38 angeordneten Fügezone 3 der zu verschweißenden Faserverbundbauteile elektrische Kontakte 5 vorgesehen, welche mit der Vakuummembran 9 luftdicht verbunden sind.

Zum luftdichten Verbinden der Elemente der Vakuumanordnung 8 sind hier beispielhaft luftdichte Klebebänder 36 vorgesehen. Diese sind zur besseren Übersichtlichkeit lediglich schematisch mit etwas Abstand eingezeichnet und liegen tatsächlich selbstverständlich direkt auf den zu verbindenden Elementen, hier den Kontakten 5 und der Vakuummembran 9, auf.

Das gemeinsame Abdecken der zu fügenden Faserverbundbauteile 1,2 mit der Vakuumanordnung 8 umfasst bei dieser Ausführungsform ein Aufbringen zumindest eines elektrisch leitenden Elements 10 als elektrischen Kontakt 5 in der Fügezone 3. Das elektrisch leitende Element 10 wird zur Realisierung einer Vakuumanordnung 8 mit der Vakuummembran 9 luftdicht verbunden. Ferner weist die Vakuummembran einen damit gekoppelten Absaugstutzen 18 zum Anschluss an eine Vakuumpumpe auf. Wird über den Absaugstutzen 18 ein Unterdruck angelegt, wie mit dem hier eingezeichneten Pfeil symbolisiert, wirkt der Atmosphärendruck auf die Fügezone 3 und drückt so die Faserverbundbauteile 1, 2 im Überlappbereich 38, in welchem sich die Fügezone 3 befindet, zusammen.

Die Druckbeaufschlagungsanordnung 4 ist hier beidseitig vorgesehen und deckt die Fügezone 3 sowohl an der Oberseite als eine Unterseite vollständig ab. Sie erstreckt sich ferner über den Überlapp-Bereich der Faserverbundbauteile 1, 2 hinaus. Bei der dargestellten Ausführungsform ist die Druckbeaufschlagungsanordnung beispielhaft zweiteilig. An beiden Seiten ist sie somit gegenüber den beiden Faserverbundbauteile 1, 2 jeweils einzeln mit den Dichtelementen 19 abgedichtet.

Bei weiteren Ausführungsformen wäre es auch denkbar, an der Unterseite eine feste Form und lediglich an der Oberseite die Vakuumanordnung 8 vorzusehen.

Die Schweißeinrichtung 31 ist hier mit zwei gegenüberliegend angeordneten Schweißelektroden ausgebildet, welche mit einer Schweißquelle koppelbar sind. Es handelt sich um auf den Kontakten 5 entlang der Fügezone 3 bewegbare Schwei-ßelektroden. Die Schweißelektroden sind unabhängig von der Vakuumanordnung 8 bewegbar. Der mittels der Vakuumanordnung aufgebrachte Druck bleibt daher währen und nach dem Verschweißen konstant. Somit bleibt der Druck bis zum Erstarren der thermoplastischen Matrix der Faserverbundbauteile 1, 2 aufrechterhalten. Auf diese Weise wird Schweißfehlern durch Luft- oder Gaseinschlüsse, die zu Porenbildung führen kann, entgegengewirkt.

An den Überlapp angrenzend sind nicht elektrisch leitfähige Hilfseinlagen 37 an beiden Seiten des Stoßes aufgebracht. Diese dienen der Vermeidung von Falten der Vakuummembran und erleichtern so eine luftdichte Verbindung. Die Hilfseinlagen 37 können aus nicht leitendem und vorzugsweise an die Thermoplastmatrix nicht anhaftendem Material mit genügend hoher Schmelztemperatur ausgebildet sein, sodass sie bei dem Schweißprozess nicht mit aufschmelzen. Gleiches gilt auch für die Materialien der Druckbeaufschlagungsanordnung 4 bzw. der Vakuumanordnung 8. Alternativ oder zusätzlich können die Hilfseinlagen 37 auch in nicht leitende bzw. isolierende Folie eingewickelt oder mit einer isolierenden Beschichtung versehen sein.

Eine derartige Vorrichtung 20 eignet sich für ein erfindungsgemäßes Verfahren zum thermischen Fügen thermoplastischer Faserverbundbauteile 1, 2. Dazu wird in einem ersten Schritt ein gemeinsames Abdecken der zu fügenden thermoplastischen Faserverbundbauteile 1, 2 zumindest im Bereich der Fügezone 3 mit der Druckbeaufschlagungsanordnung 4 vorgenommen. Ein weiterer Schritt umfasst das flächige Druckbeaufschlagen der zu fügenden thermoplastischen Faserverbundbauteile 1, 2 mit der Druckbeaufschlagungsanordnung 4, so dass die Faserverbundbauteile 1, 2 zumindest in der Fügezone 3 aneinander gedrückt werden. In einem weiteren Schritt folgt das Verschweißen der Faserverbundbauteile 1, 2 in der Fügezone 3 während der Druckbeaufschlagung. Anschließend wird die Druckbeaufschlagung zumindest bis zum Erstarren der Fügezone 3 aufrecht erhalten.

Zur Verbesserung der Kontaktierung der elektrischen Kontakte 5 mit den Faserverbundbauteilen 1, 2 kann das Abdecken der zu fügenden thermoplastischen Faserverbundbauteile 1, 2 das Aufbringen einer Kontaktpaste zwischen den Kontakten 5 und den Faserverbundbauteilen 1, 2 umfassen.

Sofern die Druckbeaufschlagungsanordnung 4 wie hier als Vakuumanordnung 8 vorgesehen wird, umfasst das Druckbeaufschlagen das Anlegen eines Unterdrucks.

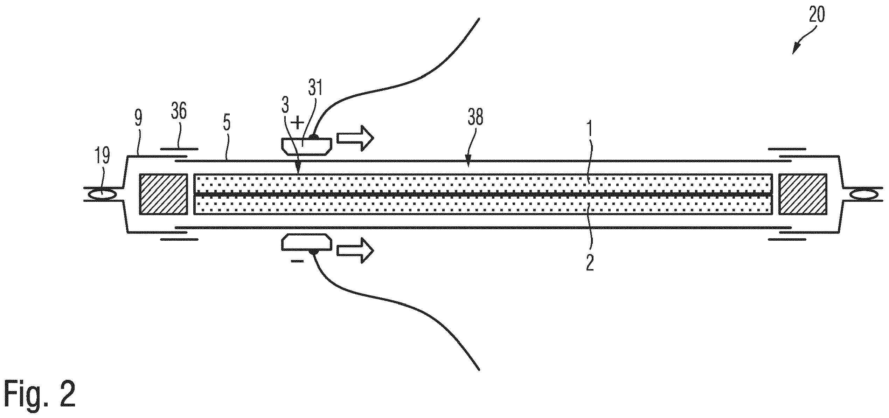

Fig. 2 zeigt eine Längsschnittansicht der Vorrichtung 20 nach Fig. 1.

Die Faserverbundbauteile 1, 2 sind hier dementsprechend durchgehend in dem die zu verbindende Länge des eine Fügezone 3 definierenden Überlappbereich 38 dargestellt, über welchen sich auch die Kontakte 5 kontinuierlich erstrecken. Die Schweißelektroden der Schweißeinrichtung 31 sind entlang der Kontakte 5 längsverschieblich ausgebildet, wie mit den eingezeichneten Pfeilen symbolisiert. Auf diese Weise wird das Verschweißen entlang der Fügezone 3 kontinuierlich durch lokales Anlegen eines Schweißstroms an die Kontakte 5 vorgenommen, wobei die Schweißelektroden parallel entlang der Fügezone 3 fortbewegt werden.

Die Elektroden sind entsprechend mit einer auf den Kontakten gut gleitenden Oberfläche gebildet. Bei weiteren Ausführungsformen können die Elektroden alternativ oder zusätzlich auch Rollen oder Bürsten aufweisen, die für eine bewegte bzw. schleifende Kontaktierung ausgebildet sind.

Da die Kontakte 5 luftdicht mit der Vakuummembran 9 verbunden sind, bleibt der Unterdruck während des Schweißvorgangs konstant. Auch im Anschluss an den Schweißprozess bleibt der Unterdruck noch angelegt, bis die Fügezone 3 zumindest überwiegend erstarrt ist. Dies kann beispielsweise der Fall sein, sobald sich die Fügezone bis unterhalb der Glasübergangstemperatur des thermoplastischen Matrixwerkstoffs abgekühlt hat.

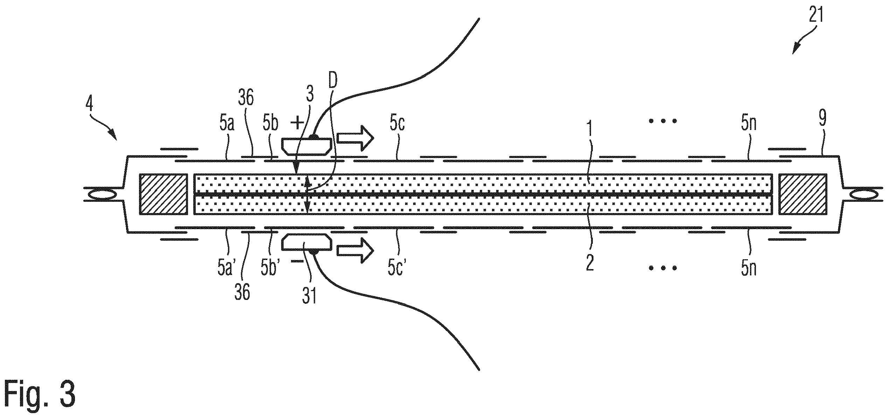

Fig. 3 zeigt eine Längsschnittansicht einer Vorrichtung 21 zum thermischen Fügen thermoplastischer Faserverbundbauteile gemäß einer weiteren Ausführungsform.

Diese Ausführungsform unterscheidet sich durch eine Unterteilung der elektrischen Kontakte 5 in eine Vielzahl voneinander isolierte Kontaktabschnitte 5a, 5b, 5c, ..., 5n an der Oberseite und 5a', 5b', 5c', ..., 5n' an der Unterseite. Die tatsächliche Anzahl voneinander isolierter Kontaktabschnitte ist dabei nicht begrenzt, wie mit den drei Punkten zwischen 5c und 5n bzw. 5c' und 5n' angedeutet. Die Darstellung ist diesbezüglich rein beispielhaft zu verstehen. Bei der dargestellten Ausführungsform ist die luftdichte elektrisch isolierte Verbindung der Kontaktabschnitte beispielhaft mittels luftdichter Klebebänder 36 realisiert.

Zum Verschweißen der Faserverbundbauteile 1, 2 wird mit einer derartigen Vorrichtung 21 ein Schweißstrom an beiden Seiten der Fügezone 3 an zwei jeweils gegenüberliegenden Kontaktabschnitten 5a, 5a' bzw. 5b, 5b, 5c, 5c' oder 5n, 5n' gleichzeitig angelegt. Die Schweißelektroden der Schweißeinrichtung 31 bewegen sich im Wesentlichen in gleicher Weise wie in Bezug auf Fig. 2 beschrieben parallel entlang der Fügezone 3 fort, sodass die Kontaktabschnitte nacheinander abgefahren werden. Der Stromfluss des Schweißstroms ist dabei stets in Dickenrichtung der Faserverbundbauteile vorgesehen und kann sich durch die isolierte Verbindung der Kontaktabschnitte auch nicht seitlich bzw. über andere Abschnitte der Kontakte verteilen. Auf diese Weise wird sichergestellt, dass das Verschweißen der Faserverbundbauteile 1, 2 mittels eines Stromflusses in Dickenrichtung D der Faserverbundbauteile 1, 2 gesteuert wird.

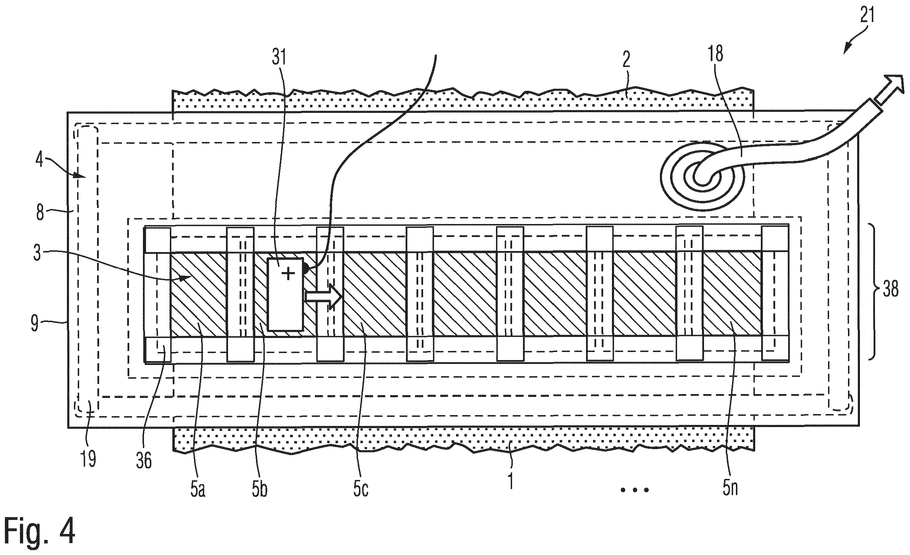

Fig. 4 zeigt eine Draufsicht auf die Vorrichtung nach Fig. 3.

In dieser ist erkennbar, dass die Faserverbundbauteile 1, 2 im Überlappbereich 38 vollständig mit der Druckbeaufschlagungsanordnung 4 abgedeckt sind. Die Vakuumanordnung 8 erzeugt den Unterdruck somit gleichmäßig im gesamten Überlappbereich 38, insbesondere über die gesamte Fügezone 3.

Ebenfalls erkennbar sind die luftdicht und elektrisch isoliert miteinander verbundenen Kontaktabschnitte 5a, 5b, 5c, ..., 5n über die gesamte Breite der Fügezone verteilt, sodass die Faserverbundbauteile 1, 2 mit der eingezeichneten Längsbewegung der Schweißelektroden über ihre gesamte Breite verschweißt werden. Die Schweißelektroden der Schweißeinrichtung 31 kontaktieren dabei die einzelnen Kontaktabschnitte nacheinander, sodass das Verschweißen der Fügezone segmentweise vorgenommen wird.

Die Abdichtung mit Dichtelementen 19 ist umlaufend um die Fügezone vorgesehen. An allen Segmenten der Fügezone liegt somit eine gleiche durch die Vakuumanordnung 8 aufgebrachte Druckbeaufschlagung an.

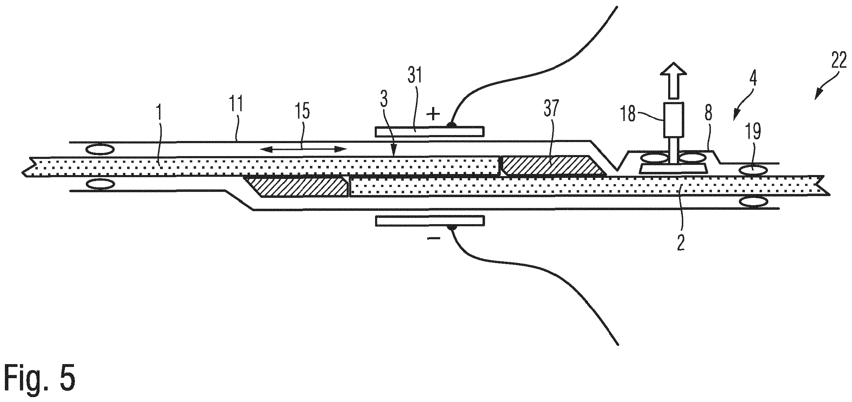

Fig. 5 zeigt eine Querschnittansicht einer Vorrichtung 22 zum thermischen Fügen thermoplastischer Faserverbundbauteile 1, 2 gemäß einer weiteren Ausführungsform.

Anstatt einer herkömmlichen Vakuummembran 9 der Druckbeaufschlagungseinrichtung ist bei dieser Ausführungsform eine Abdeckung in Form einer richtungsabhängig leitfähigen Membran 11 vorgesehen. Die Membran 11 ist im Wesentlichen flexibel sowie luftdicht ausgebildet und unterscheidet sich maßgeblich durch ihre richtungsabhängige elektrische Leitfähigkeit normal zu ihrer Hauptflächenausdehnung. In ihren Hauptflächenausdehnungsrichtungen 15 ist die Membran 11 hingegen elektrisch isolierend ausgebildet. Die Membran 11 lässt sich somit im Vergleich zur Vakuummembran 9 wesentlich einfacher aufbauen, da keine Unterbrechungen oder zusätzliche elektrisch leitenden Elemente notwendig sind. Auf diese Weise kann hier ohne zusätzliche Isolierungsmaßnahmen in der Fügezone 3 geschweißt werden.

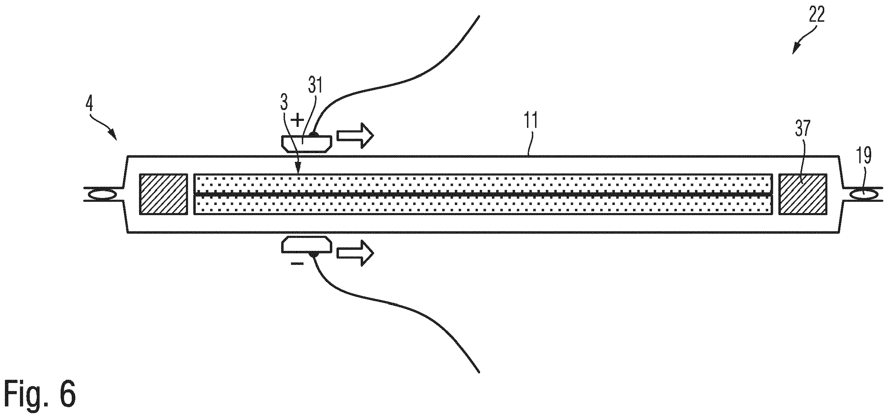

Fig. 6 zeigt eine Längsschnittansicht der Vorrichtung 22 nach Fig. 5.

Auch hier wird das Verschweißen durch mit den Pfeilen symbolisierte Längsverschiebung der Schweißelektroden der Schweißeinrichtung 31 entlang der Fügezone 3 vorgenommen. Besonders vorteilhaft ist somit eine kontinuierliche Verschweißung mit der Bewegung ermöglicht.

Durch die richtungsabhängige elektrische Leitfähigkeit der Abdeckung existiert keine Aufteilung in Segmente mehr, in welchen die Faserverbundbauteile 1, 2 mit einer Vorrichtung 21 gemäß Fig. 3 und 4 nacheinander verschweißbar sind. Vielmehr kann mit der hier dargestellten Vorrichtung 22 ein lokales Verschweißen stets exakt an der Stelle der Fügezone 3, an welcher sich eine Schweißelektrode der Schweißeinrichtung 31 gerade befindet, vorgenommen werden.

Ein Schmelzbad des Schweißprozesses bewegt sich somit kontinuierlich mit den Schweißelektroden entlang der Fügezone fort. Auf diese Weise verläuft das Verschweißen sehr gleichmäßig, sodass eine homogene Schweißnaht erreicht wird.

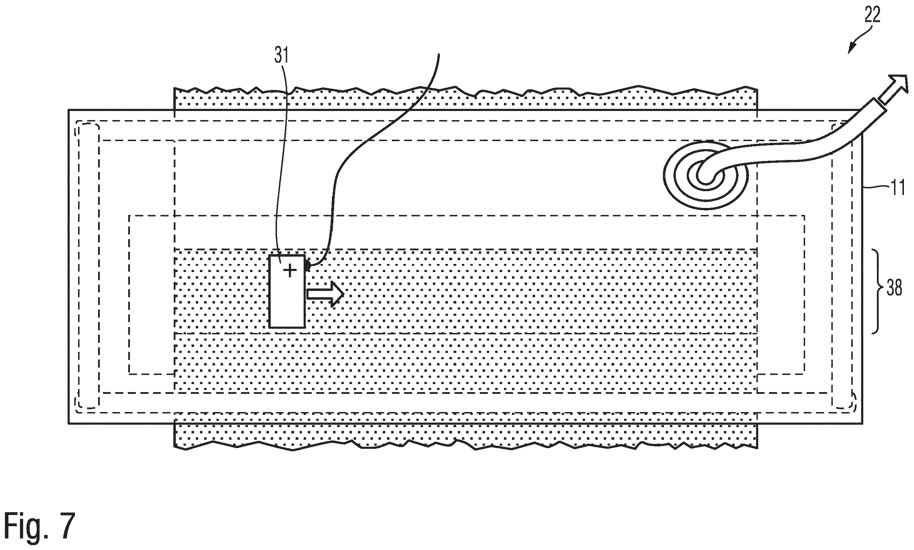

Fig. 7 zeigt eine Draufsicht auf die Vorrichtung nach Fig. 5 und 6.

Erkennbar deckt die Abdeckung mit ihrer Membran 11 hier den gesamten Überlappbereich 38 ab. Insbesondere ist keinerlei Unterbrechung der Membran 11 notwendig.

Zur Bereitstellung der luftdichten flexiblen und lediglich normal zur Hauptausdehnungsrichtung elektrisch leitfähigem Ausbildung kann es sich bei der Membran 11 um einen Multimaterialmix aus leitfähigen und nicht leitfähigen Materialien handeln, wobei die leitfähigen Materialien die beiden Oberflächen der Membran 11 miteinander elektrisch verbinden und zumindest überwiegend voneinander beabstandet sind. Die Membran 11 enthält beispielsweise eine Kunststofffolie mit eingebetteten, die Dicke der Folie überbrückenden Metallpartikeln oder ein luftdichtes Kunststofffasertextil mit darin eingebrachten, die Stärke des Textils durchdringenden Metallfäden.

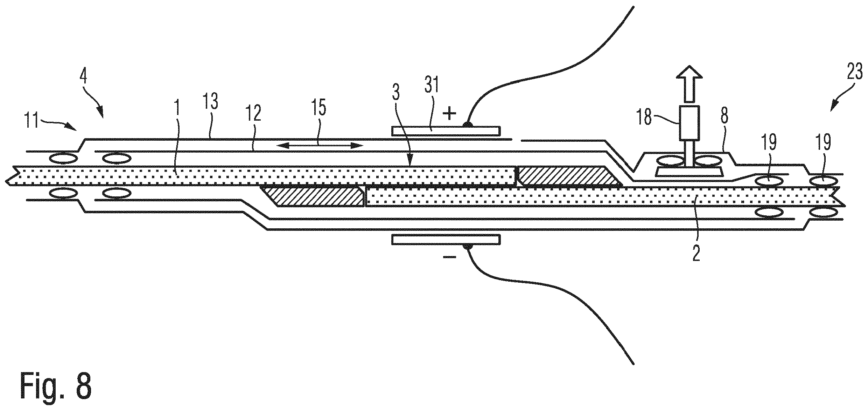

Fig. 8 zeigt eine Querschnittansicht einer Vorrichtung 23 zum thermischen Fügen thermoplastischer Faserverbundbauteile gemäß einer weiteren Ausführungsform.

Bei dieser Ausführungsform ist zwar auch eine Membran 11 als Abdeckung vorgesehen, im Unterschied zu Fig. 5 bis 7 ist die Membran 11 aber aus zwei Schichten 12, 13 aufgebaut. Eine erste äußere Schicht 13 ist luftdicht, flexibel und lediglich normal zur Hauptausdehnungsrichtung elektrisch leitfähig ausgebildet. Es handelt sich insbesondere um ein luftdichtes oder annähernd luftdichtes Medium, z.B. eine Folie oder ein Textil. Eine signifikante elektrische Leitfähigkeit weist die Abdeckung ausschließlich in Dickenrichtung auf. In Richtungen parallel zu ihrer Oberfläche weist sie jedoch keine signifikante elektrische Leitfähigkeit auf.

Eine zweite Schicht 12 ist luftdurchlässig und für thermoplastische Polymerschmelze undurchlässig ausgebildet. Insbesondere handelt es sich dabei um ein semipermeables Medium, welches für Luft durchlässig, jedoch für den geschmolzenen bzw. verflüssigten Matrixwerkstoff in einem Schmelzbad der Fügepartner, zumindest nahezu, impermeabel ist. Ferner weist die zweite Schicht 12 gleich wie die erste Schicht 13 eine signifikante elektrische Leitfähigkeit ausschließlich in Dickenrichtung auf. In Richtungen parallel zur Oberfläche weist sie jedoch keine signifikante elektrische Leitfähigkeit auf.

Bei der dargestellten Ausführungsform sind die erste Schicht 13 und die zweite Schicht 12 jeweils separat zu den Faserverbundbauteilen 1, 2 mit Dichtelementen 19 abgedichtet. Die Abdeckung ist auch hier als Vakuumanordnung 8 ausgebildet. Bei Druckbeaufschlagung durch Anlegen eines Unterdrucks am Absaugstutzen 18 wird zwischen der zweiten Schicht und den Faserverbundbauteilen vorhandene Luft durch die zweite Schicht 12 hindurch abgesaugt, sodass auf eine Fügezone 3 in gleicher Weise wie mit nur einer Schicht ein gleichmäßiger Druck aufgebracht wird. Bei dieser Anordnung können jedoch durch die zweite Membran auch im Schweißprozess freigesetzte Gase vorteilhaft während des Schweißprozesses leicht abgesaugt werden. Auf diese Weise kann Porosität im Schweißbereich zusätzlich vermieden bzw. reduziert werden.

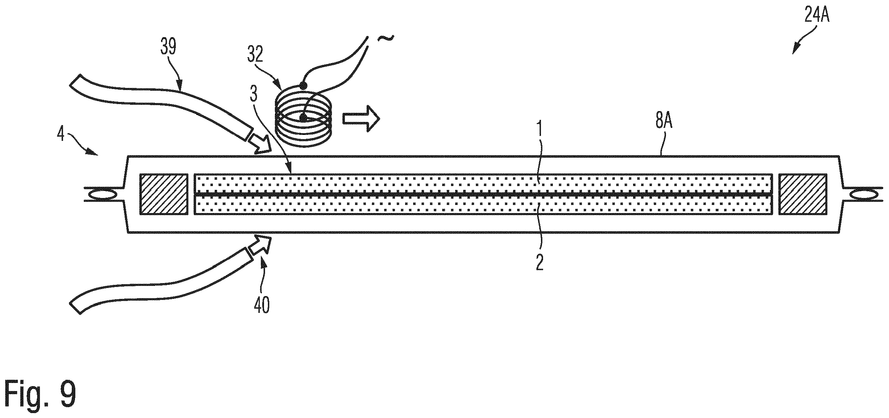

Fig. 9 zeigt eine Längsschnittansicht einer Vorrichtung 24A zum thermischen Fügen thermoplastischer Faserverbundbauteile gemäß einer weiteren Ausführungsform.

Im Unterschied zu den vorangehenden Ausführungsformen wird bei dieser Ausführungsform der Vorrichtung 24A ein Schweißenergieeintrag in die zu fügenden Faserverbundbauteile 1, 2 über Induktion vorgenommen. Die Vakuumanordnung 8A ist für Magnetfelder durchlässig ausgebildet. Die Faserverbundbauteile 1, 2 werden somit durch von außerhalb der Vakuumanordnung 8A angelegte wechselnde Magnetfelder, welche innerhalb der Faserverbundbauteile widerstandsbehaftete Wirbelströme induzieren, verschweißt. Eine induktive Schweißeinrichtung 32, beispielsweise in Form einer Induktionsspule, wird dazu von außerhalb der Vakuumanordnung 8A über die Fügezone 3 geführt. Beispielsweise kann sich die Schweißeinrichtung 32 dazu kontinuierlich über die Fügezone 3 hinweg bewegen, wie mit dem eingezeichneten Bewegungspfeil symbolisiert.

Bei dieser Ausführungsform ist eine aktive Kühlung der Vakuumanordnung 8 vorgesehen. Dazu ist eine Kühlfluidquelle 39, hier beispielhaft in Form einer Druckluftversorgung, vorgesehen, welche stetig ein Kühlfluid 40, hier beispielhaft Druckluft, über die Vakuumanordnung 8 strömt. Somit wird gewährleistet, dass ein Energieeintrag im Zentrum der Fügezone 3 an der Grenzfläche zwischen den Faserverbundbauteilen 1, 2 wesentlich höher ist als im äußeren oberflächennahen Bereich.

Bei weiteren Ausführungsformen können selbst verständlich andere Kühlmethoden oder Kühlfluidführungen, wie Kühlkanäle oder dergleichen, eingesetzt werden.

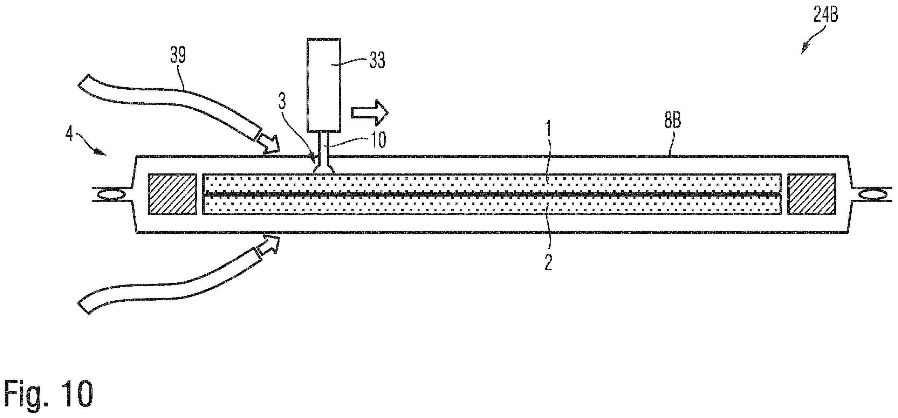

Fig. 10 zeigt eine Längsschnittansicht einer abgewandelten Vorrichtung 24B zum thermischen Fügen thermoplastischer Faserverbundbauteile 1, 2.

Im Unterschied zu den vorangehenden Ausführungsformen wird bei dieser Ausführungsform 25 ein Schweißenergieeintrag in die zu fügenden Faserverbundbauteile 1, 2 mittels eines Laserstrahls 10 vorgenommen.

Die Vakuumanordnung 8B ist dabei für eine vorbestimmte Laserstrahlung einer Laserquelle 33 transparent vorgesehen, sodass der Laserstrahl hindurch dringt. Die Faserverbundbauteile 1, 2 werden so mittels des von außerhalb der Vakuumanordnung 8 eingebrachten Laserstrahls 10 verschweißt, welcher sich entlang der Fügezone fortbewegt. Da Laserstrahlschweißnähte vergleichsweise schmal sind, ist in diesem Fall auch eine mehrfache parallele Verschweißung in dem Überlappbereich 38 denkbar.

Auch bei dieser Ausführungsform ist vorzugsweise eine aktive Kühlung der Vakuumanordnung 8B vorgesehen, welche beispielhaft mit einer Kühlfluidquelle 39 gleich wie in Bezug auf Fig. 9 erläutert ausgebildet ist.

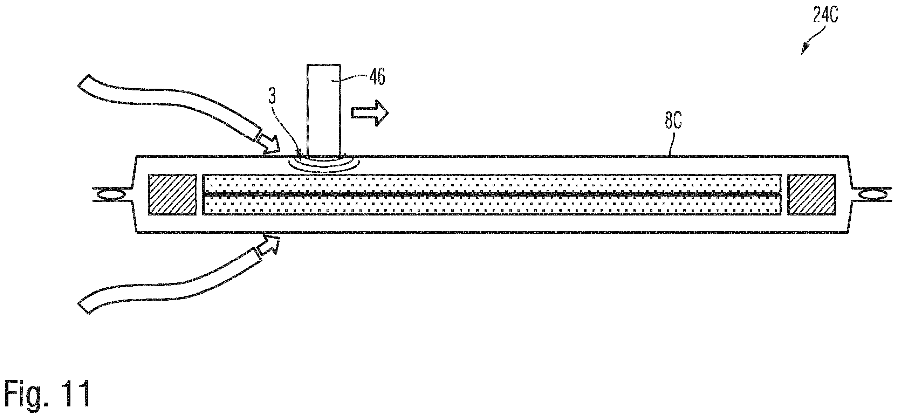

Fig. 11 zeigt eine Längsschnittansicht einer weiteren abgewandelten Vorrichtung 24C zum thermischen Fügen thermoplastischer Faserverbundbauteile.

Im Unterschied zu den vorangehenden Ausführungsformen wird bei dieser Vorrichtung 24C ein Schweißenergieeintrag in die zu fügenden Faserverbundbauteile 1, 2 mittels Ultraschall vorgenommen. Dazu ist eine Schweißeinrichtung 46 in Form einer Ultraschallsonotrode vorgesehen. Die Vakuumanordnung 8C ist derart ausgebildet, dass sie den Ultraschall von außen in die Fügezone weiterleitet. Die Faserverbundbauteile 1, 2 werden somit durch von außerhalb der Vakuumanordnung 8C mittels der Sonotrode erregtem und über die Vakuumanordnung 8C übertragenen Ultraschall verschweißt.

Auch bei dieser Ausführungsform ist vorzugsweise eine aktive Kühlung der Vakuumanordnung 8 vorgesehen, welche beispielhaft mit einer Kühlfluidquelle 39 gleich wie in Bezug auf Fig. 9 erläutert ausgebildet ist. Insbesondere im Falle eines Vakuumsacks bzw. einer Vakuummembran als Vakuumanordnung 8C kann so ein Ankleben vermieden werden.

Die Vakuummembran und die Sonotrode sind dabei derart ausgebildet, dass die Vakuummembran den Ultraschall in die Fügezone weitergibt bzw. leitet.

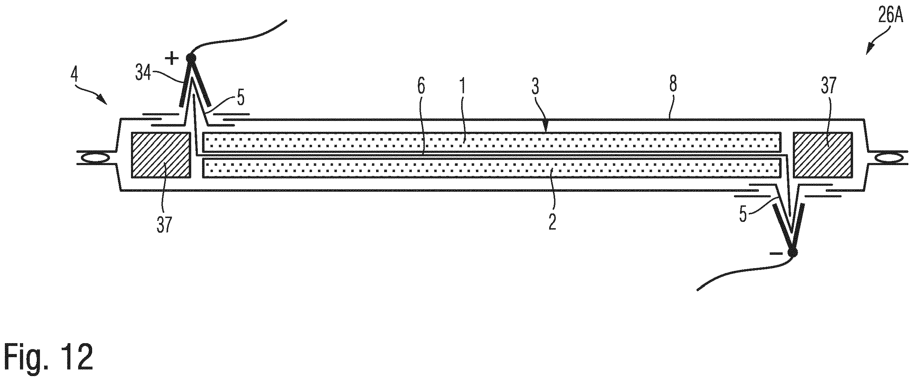

Fig. 12 zeigt eine Längsschnittansicht einer Vorrichtung 26A zum thermischen Fügen thermoplastischer Faserverbundbauteile 1, 2 gemäß einer weiteren Ausführungsform.

Bei dieser Ausführungsform handelt es sich wiederum um eine Vorrichtung 26A zum Widerstandsschweißen. Allerdings wird bei dieser Ausführungsform ein Schweißstrom nicht über die zu fügenden Faserverbundbauteile 1, 2 selbst, sondern über einen Schweißzusatzwerkstoff 6 in die Fügezone 3 eingeleitet. Es handelt sich um einen in entsprechender Weise ausgelegten leitfähigen Schweißzusatzwerkstoff 6, der zwischen die zu fügenden thermoplastischer Faserverbundbauteile 1, 2 in der Fügezone 3 eingebracht wird. Beispielsweise kann es sich dabei um eine leitfähige Thermoplast-Prepreglage handeln.

Die Druckbeaufschlagungsanordnung 4 weist seitlich an der Fügezone 3 angeordnete elektrische Kontakte 5 auf, mit welchen der Schweißzusatzwerkstoff 6 verbunden wird. Der Schweißzusatzwerkstoff wird dazu am längsseitigen Ende der Fügezone 3 direkt zu dem mit der Vakuumanordnung 8 luftdicht verbundenen elektrischen Kontakt 5 geführt. Seitlich davon sind Schweißhilfsmittel in Form von Hilfseinlagen 37 zur Begrenzung der Fügezone 3 vorgesehen.

Bei der dargestellten Ausführungsform ist zur Druckbeaufschlagung ebenfalls eine Vakuumanordnung 8 vorgesehen. Auch hier wird der Druck vor dem Verschwei-ßen aufgebracht.

Das Verschweißen wird durch Anlegen eines Schweißstroms an den Schweißzusatzwerkstoff 6 vorgenommen, welcher durch den Schweißstrom erhitzt wird und die überlappenden Oberflächen der Faserverbundbauteile 1, 2, aufschmilzt. Durch den von außen wirkenden Druck verbinden sich die aufgeschmolzenen Oberflächen mit dem Schweißzusatzwerkstoff 6 und werden so miteinander verschweißt.

Bei weiteren Ausführungsformen kann der Schweißzusatzwerkstoff 6 von einer elektrisch nicht leitfähigen Schicht umgeben sein. Selbstverständlich sind die Kontaktstellen von einer solchen Schicht ausgenommen. Unerwünschter Abfluss von Strom in die Faserverbundbauteile wird somit vermieden. Stattdessen wird ein Stromfluss ausschließlich durch den Schweißzusatzwerkstoff sichergestellt, was die erwünschte gleichmäßige Wärmeverteilung über den gesamten Schweißzusatzwerkstoff 6 und das entsprechende Aufschmelzen der Faserverbundbauteile 1, 2 gewährleistet. Die nicht leitfähige Schicht wird mit dem übrigen Schweißzusatzwerkstoff in der Fügezone 3 mit verschweißt. Sie ist beispielsweise mit Glasfaser-Thermoplast-Prepreglagen gebildet, sodass sie auch beim Aufschmelzen der Matrix der zu fügenden Faserverbundbauteile 1, 2 nicht leitfähig wird.

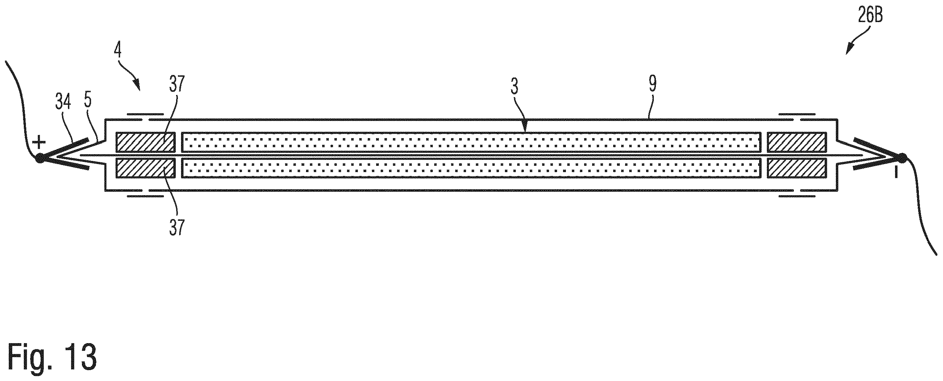

Fig. 13 zeigt eine Längsschnittansicht einer abgewandelten Vorrichtung 26B zum thermischen Fügen thermoplastischer Faserverbundbauteile 1, 2 gemäß einer weiteren Ausführungsform.

Die Vorrichtung 26B unterscheidet sich von der Vorrichtung 26A nach Fig. 12 durch die Führung des Schweißzusatzwerkstoffes 6 durch die Hilfseinlagen 37. Dadurch ist der Schweißzusatzwerkstoff 6 in der Fügezone sicher positioniert. Ferner wird randseitiges Aufschmelzen der Faserverbundbauteile vermieden.

Mit der veränderte Führung des Schweißzusatzwerkstoffs 6 ändert sich die Position der elektrischen Kontakte 5, welche hier an einem seitlichen Rand neben der Hilfseinlagen 37 angeordnet sind.

Bei weiteren Ausführungsformen kann eine Schweißung auch ohne die Hilfseinlagen 37 durchgeführt werden.

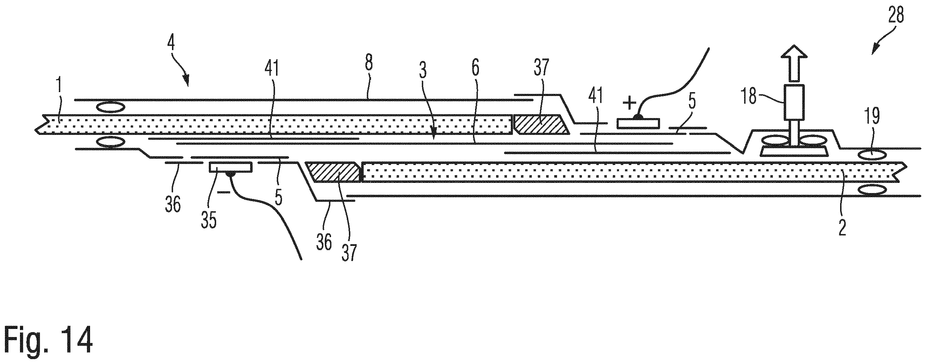

Fig. 14 zeigt eine Querschnittansicht einer Vorrichtung 28 zum thermischen Fügen thermoplastischer Faserverbundbauteile 1, 2 gemäß einer weiteren Ausführungsform.

Bei dieser Vorrichtung 28 ist eine weitere Variation der Führung und Kontaktierung des Schweißzusatzwerkstoffes 6 vorgesehen. Dieser erstreckt sich hier entlang der Faserverbundbauteile 1, 2 quer über die Fügezone 3 hinweg. An den langen Enden der Fügezone 3 sind Hilfseinlagen 37 zur Begrenzung der Fügezone vorgesehen. In den an die Fügezone 3 anschließenden Bereichen sind dann die Kontakte 5 der Druckbeaufschlagungsanordnung 4 vorgesehen. Der Schweißzusatzwerkstoff 6 verläuft beidseitig unter den Hilfseinlagen 37 hindurch jeweils bis zu einem neben der Fügezone 3 angeordneten Kontakt 5, über welchen ein Schweißstrom in den Schweißzusatzwerkstoff 6 geleitet wird.

In den an die Fügezone angrenzenden Bereichen der Faserverbundbauteile 1, 2, entlang welcher der Schweißzusatzwerkstoff 6 über die Fügezone 3 hinaus geführt ist, ist zum Schutz ein Isolationselement 41 zwischen der Oberfläche der Faserverbundbauteile 1, 2 und dem Schweißzusatzwerkstoff 6 vorgesehen. Das Isolationselement 41 kann beispielsweise in Form einer isolierenden Trennfolie zwischen dem Schweißzusatzwerkstoff und dem jeweiligen Faserverbundbauteil angebracht sein, um ein Anschmelzen außerhalb der Fügezone 3 zu vermeiden.

Bei der Druckbeaufschlagungsanordnung 4 handelt es sich auch hier beispielhaft um eine Vakuumanordnung 8.

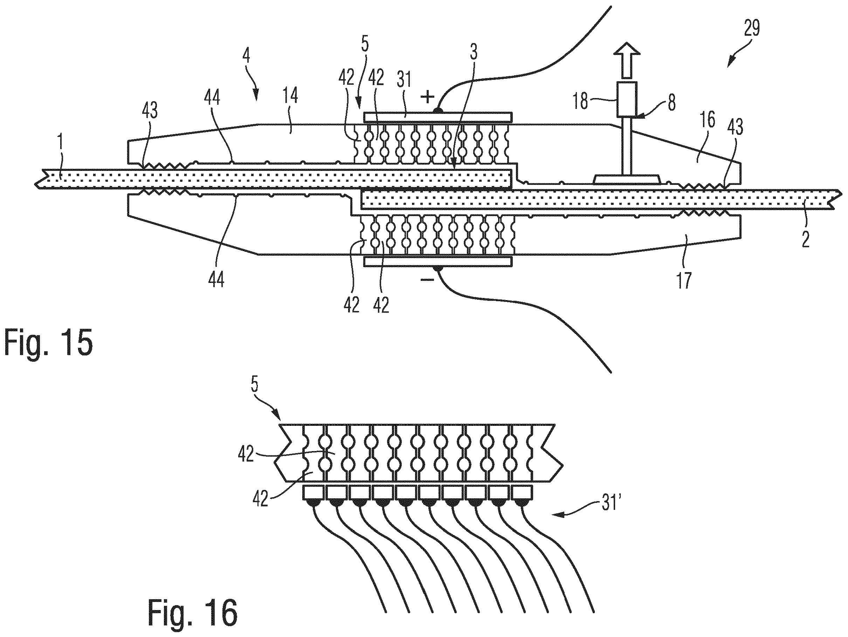

Fig. 15 zeigt eine Querschnittansicht einer Vorrichtung 29 zum thermischen Fügen thermoplastischer Faserverbundbauteile 1, 2 gemäß einer weiteren Ausführungsform.

Bei dieser Ausführungsform ist die Druckbeaufschlagungsanordnung 4 grundlegend anders aufgebaut. Zwar handelt es sich ebenfalls um eine Vakuumanordnung 8 mit einem Absaugstutzen 18, im Unterschied zu den vorangehend beschriebenen Ausführungsformen ist hier jedoch statt einer Vakuummembran eine flexible luftdichte Form 14 als Abdeckung vorgesehen.

Die flexible Form 14 weist insbesondere ein leicht elastisch verformbares Silikonmaterial auf, sodass bei Anlegen eines Unterdrucks an den Absaugstutzen 18, ähnlich wie bei einer Vakuumfolie, ein gleichmäßiger flächiger Druck auf die Fügezone 3 ausgeübt werden kann.

Im Bereich der Fügezone 3 ist die Form 14 mit leitenden Elementen 42 als elektrische Kontakte 5 versehen, welche sich in Dickenrichtung von einer äußeren zu einer inneren Oberfläche der Form 14 erstrecken. Insbesondere handelt es sich dabei um Metallstäbe, welche in die Form 14 mit eingegossen sind. Diese sind ausgebildet und vorgesehen um einen von außen mittels einer Schweißelektrode einer Schweißvorrichtung 31 angelegten Schweißstrom in die Fügezone 3 einzuleiten.

Die Form 14 ist mit einem Oberteil 16 und einem Unterteil 17 gebildet, die jeweils flexibel sind. Bei weiteren Ausführungsformen wäre es auch denkbar, statt dem Unterteil 17 eine feste Form vorzusehen und lediglich das Oberteil als flexible Form 14 auszubilden.

Die Begriffe Ober- und Unterteil beziehen sich hier jeweils relativ zur Fügezone 3 und sind nicht einschränkend für eine absolute Ausrichtung der Form 14 zu verstehen.

Das Oberteil 16 und das Unterteil 17 sind jeweils hinsichtlich ihrer Form an die Bauteilkontur der Faserverbundbauteile 1, 2 angepasst, sodass keine Schweißhilfseinlagen nötig sind. Der Absaugstutzen 18 ist beispielhaft lediglich an der Oberseite 16 vorgesehen, wobei eine Anbringung an der Unterseite selbstverständlich ebenfalls denkbar ist. Ferner sind die leitenden Elemente 42 im Bereich der Fügezone 3 am Unterteil gleichermaßen wie am Oberteil vorgesehen.

Die Form 14 weist darüber hinaus umfänglich angeordnete integrierte Dichtlippen 43 auf, sodass hier auch keine zusätzlichen Dichtelemente oder Abklebungen nötig sind.

Die Form 14 weist ferner an ihrer inneren Oberfläche integrierte Kanäle zur homogenen Druckverteilung über die abgedeckte Fläche auf. Die Kanäle können insbesondere netzartig über die innere Oberfläche der Form 14 verteilt sein. Bei der dargestellten Ausführungsform sind beispielhaft auch im Bereich der Fügezone 3 derartige Kanäle 44 vorgesehen, was aber lediglich bei nicht aufschmelzenden äußeren Decklagen der Faserverbundbauteile vorgesehen wird. Falls die Decklagen der Faserverbundbauteile 1, 2 bei dem Verschweißen mit aufschmelzen, werden im Bereich der Fügezone keine Kanäle vorgesehen.

Insgesamt ist die flexible Form 14 auf diese Weise hergerichtet, um in einer Serienproduktion Faserverbundbauteile 1, 2 nacheinander mit vergleichsweise, insbesondere im Vergleich zu einer Vakuummembran, hoher Taktzahl zu fügen, da keinerlei manuelle Abdichtungs- oder Kontaktierungsmaßnahmen nötig sind. Stattdessen wird die Form 14 nach dem Einlegen der Faserverbundbauteil 1, 2 einfach geschlossen, der Unterdruck angelegt, sodass der Schweißprozess direkt gestartet werden kann.

Bei einer weiteren Ausführungsform können die Metallstäbe ferner magnetisch ausgebildet sein. Dazu können sie als Permanentmagnet oder als Kern eines Elektromagneten mit außen darum gewickelter Spule ausgebildet sein.

Fig. 16 zeigt einen Ausschnitt einer Querschnittansicht einer Abwandlung der Vorrichtung 29 der Ausführungsform gemäß Fig. 15.

Bei dieser Abwandlung sind die einzelnen leitenden Elemente 42jeweils mit einer einzelnen Schweißelektrode bzw. einem einzeln ansteuerbaren Abschnitt einer Schweißelektrode einer Schweißeinrichtung 31' versehen. Auf diese Weise ist eine differenzielle Ansteuerung der Elektrode und damit auch der Stromübertragung über die leitenden Elemente 42 in die Fügezone 3 ermöglicht, was zu einer besseren Kontrolle der Stromflussverteilung beiträgt.

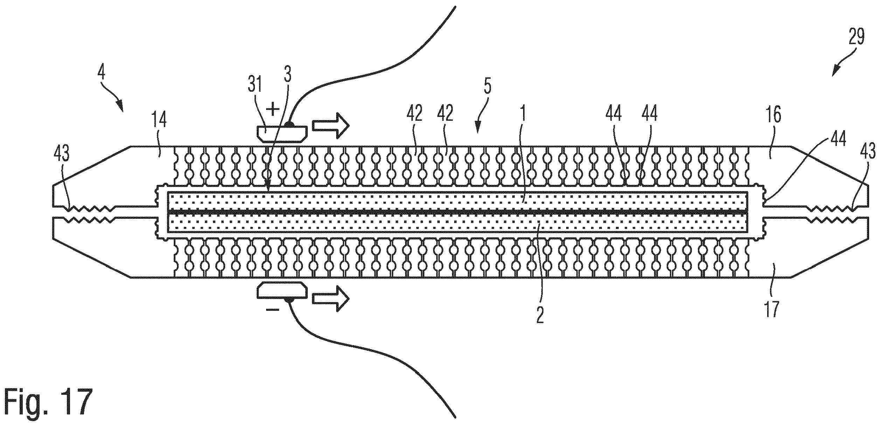

Fig. 17 zeigt eine Längsschnittansicht der Vorrichtung 29 nach Fig. 15.

Die Längsschnittebene erstreckt sich längs der Fügezone 3, entlang welcher zum Verschweißen der Faserverbundbauteile 1, 2 die Schweißelektroden einer Schweißeinrichtung 31 über die Druckbeaufschlagungsanordnung 4 geführt werden, wie mit den eingezeichneten Pfeilen symbolisiert. Die Schweißelektroden werden somit an der Außenseite der Form 14 mit den längs der Fügezone 3 angeordneten leitenden Elementen 42 nacheinander kontaktiert, so dass diese je nach Position der Elektroden den Schweißstrom an der jeweiligen Stelle in die Fügezone 3 einleiten.

In der Längsschnittansicht erkennbar sind auch an den längsseitigen Enden der Form 14 integrierte Dichtlippen 43 vorgesehen. Ferner sind auch die Vakuumkanäle 44 an den längsseitigen Enden der die Faserverbundbauteile 1, 2 aufnehmenden Innenseite der Form 14 vorgesehen.

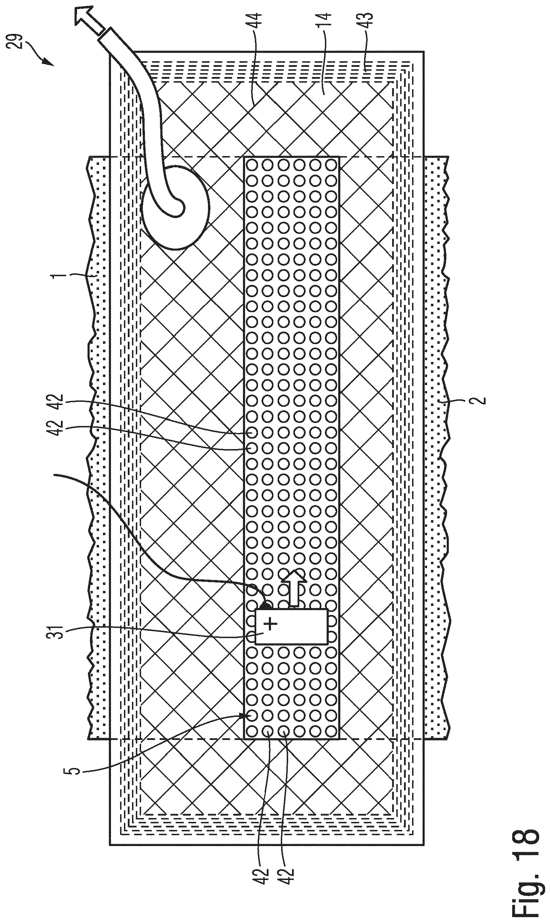

Fig. 18 zeigt eine Draufsicht auf die Vorrichtung 29 nach Fig. 17.

Die leitenden Elemente 42, welche elektrische Kontakte 5 der Druckbeaufschlagungsanordnung 4 bilden, sind matrixartig bzw. rasterartig über die Fügezone 3 verteilt angeordnet. Mit einer Längsbewegung der Schweißelektroden der Schweißeinrichtung 31 werden die leitenden Elemente 42 nacheinander kontaktiert.

Ferner ist in dieser Ansicht eine gitterartige Anordnung der an der Innenseite der Form 14 vorgesehenen Vakuumkanäle 44 schematisch dargestellt. Tatsächlich sind die Kanäle 44 jedoch von der Außenseite verdeckt. Ferner sind die um den Umfang der Form 14 umlaufenden Dichtlippen 43 schematisiert dargestellt, die hier ebenfalls tatsächlich verdeckt sind.

Bei weiteren Ausführungsformen kann die Schweißenergie auch in Form von Ultraschall von einer Sonotrode über in die Form 14 in Form eingelassener Metallstäbe ausgebildeten leitenden Elemente 42 in der Fügezone 3 auf die Bauteiloberfläche übertragen werden.

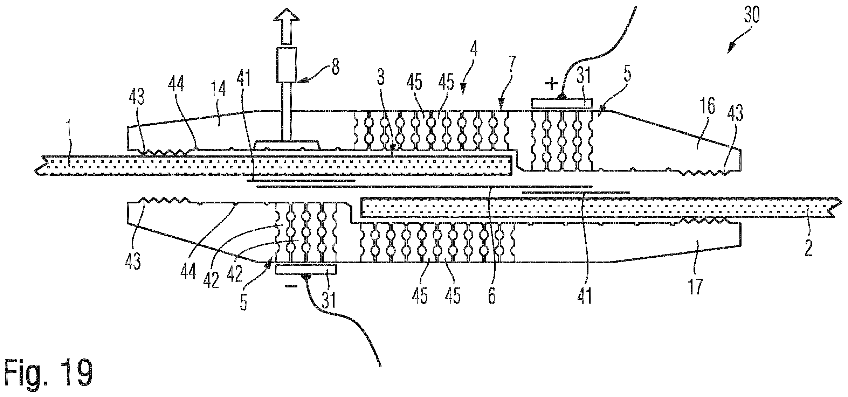

Fig. 19 zeigt eine Querschnittansicht einer Vorrichtung 30 zum thermischen Fügen thermoplastischer Faserverbundbauteile 1, 2 gemäß einer weiteren Ausführungsform.

Bei dieser Ausführungsform ist ebenfalls eine flexible Form 14 als Druckbeaufschlagungsanordnung 4 vorgesehen. Im Unterschied zu den vorangehend beschriebenen Ausführungsformen wird bei dieser Druckbeaufschlagungsanordnung ein zusätzlicher Druck magnetisch aufgebracht. Dazu ist im Bereich der Fügezone 3 eine in die Form 14 integrierte Magnetanordnung 7 vorgesehen. Das Druckbeaufschlagen umfasst bei dieser Ausführungsform somit das Anlegen magnetischer Kräfte.

Die Magnetanordnung 7 ist im Bereich der Fügezone vorgesehen. In der Fügezone addieren sich somit die Druckbeaufschlagungen durch die Vakuumanordnung 8 und die Magnetanordnung 7.

Bei der dargestellten Ausführungsform handelt es sich bei der Magnetanordnung beispielhaft um eine Vielzahl von in die Form 14 eingegossen Stabmagneten 45, welche die Form 14 im Bereich der Fügezone magnetisch zusammendrücken.

Bei weiteren Ausführungsformen wäre es auch denkbar, die Magnetanordnung 7 mit einem oder mehreren Elektromagneten zu realisieren.

Weiterhin ist es denkbar, die Magnetanordnung 7 unabhängig von einer Vakuumanordnung vorzusehen.

Bei der dargestellten Ausführungsform ist, ähnlich wie in Bezug auf Fig. 13 beschrieben, ein Schweißzusatzwerkstoff 6 in der Fügezone zwischen die zu fügenden Faserverbundbauteile 1, 2 eingelegt. Dieser wird hier mit seitlich der Fügezone angeordneten, ebenfalls in die Form 14 integrierten leitenden Elementen 42 kontaktiert, welche die elektrischen Kontakte 5 bilden. Die leitenden Elemente 42 sind dazu seitlich versetzt neben der Fügezone 3 angeordnet. Der Schweißzusatzwerkstoff 6 erstreckt sich durch die Fügezone 3 hindurch bis in die seitlichen Bereiche und ist dort mit den leitenden Elementen 42 kontaktiert.

Durch die Überlappanordnung der Bauteile 1, 2 ist an dem Oberteil 16 ein erster mit den leitenden Elementen 42 gebildeter Kontakt 5 vorgesehen, der in der dargestellten Querschnittansicht rechts neben der Fügezone 3 angeordnet ist. In dem Unterteil 17 ist an der gegenüberliegenden Seite der Fügezone 3 ein zweiter mit leitenden Elementen 42 gebildeter Kontakt 5 vorgesehen, der in der dargestellten Querschnittansicht links neben der Fügezone angeordnet ist.

Im Bereich der Kontakte 5 ist an einer dem jeweiligen Faserverbundbauteil 1, 2 zugewandten Seite des Zusatzwerkstoffs 6 ein Isolationselement 41 zum Schutz der Faserverbundbauteile 1, 2 vorgesehen, beispielsweise in Form einer isolierenden Trennfolie,

Bei einer Abwandlung der hier dargestellten Ausführungsform wäre es auch denkbar, ohne einen Schweißzusatzwerkstoff im Bereich der Fügezone die sich in Dickenrichtung durch das Unterteil und/oder das Oberteil hindurch erstreckenden Stabmagnete 45 gleichzeitig als elektrische Kontakte zum Leiten eines Schweißstroms zu nutzen. Die Stabmagnete 45 wären in diesem Fall gleichzeitig als elektrische Kontakte 5 zum Verschweißen der Faserverbundbauteile ausgebildet.

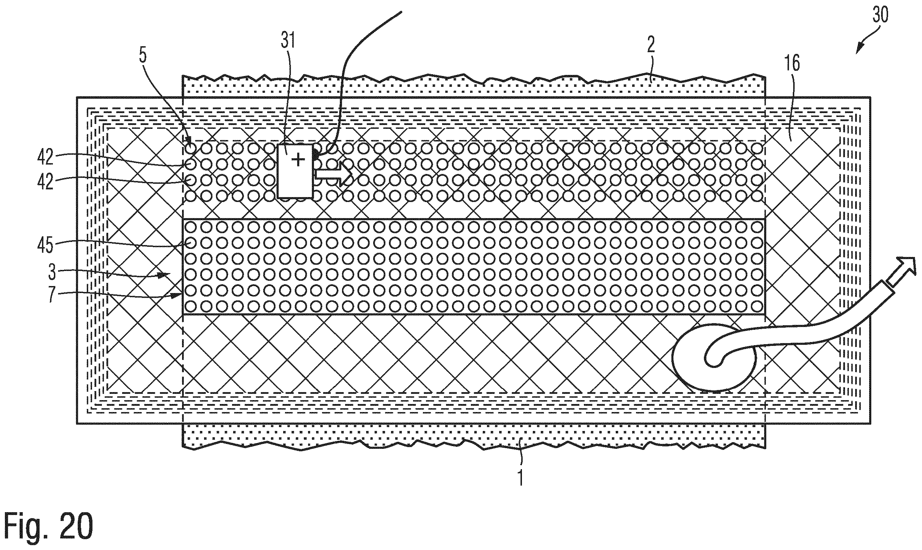

Fig. 20 zeigt eine Draufsicht auf die Vorrichtung nach Fig. 19.

In dieser Ansicht, welche eine Draufsicht auf das Oberteil 16 zeigt, ist die regelmäßige rasterartige Anordnung der im Bereich der Fügezone 3 vorgesehenen Stabmagnete 45 erkennbar, welche für gleichmäßige Druckverhältnisse in der Fügezone 3 sorgt.

Ferner sind die als elektrische Kontakte 5 vorgesehenen ebenfalls rasterartig angeordneten leitenden Elemente 42 erkennbar, welche längs der Fügezone seitlich versetzt dazu angeordnet sind. Der Schweißzusatzwerkstoff 6 ist somit an den langen Seiten der Fügezone 3 kontaktiert. Eine Schweißelektrode der Schweißeinrichtung 31 fährt zum Verschweißen der Faserverbundbauteile 1, 2 entsprechend in Längsrichtung entlang der elektrischen Kontakte 5 und kontaktiert dabei die leitenden Elemente 42 nacheinander, wie mit dem eingezeichneten Bewegungspfeil symbolisiert. Auf der gegenüberliegenden Seite bewegt sich in gleicher Weise parallel dazu eine gegenpolige zweite Schweißelektrode der Schweißeinrichtung 31 entlang der elektrischen Kontakte 5 des Unterteils 17.

Während des Schweißens und auch im Anschluss an den Schweißvorgang während des Abkühlens halten die in dem Oberteil 16 und im Unterteil 17 vorgesehenen Stabmagnete 45 der Magnetanordnung 7 die Fügezone 3 zusätzlich zu dem angelegten Unterdruck unter einer zusätzlichen Druckbeaufschlagung.

Bei weiteren Ausführungsformen wäre anstatt einer zweiseitigen Magnetanordnung auch denkbar, eine einseitige Positionierung von Magneten an einer Seite und ein magnetisierbares Medium auf der anderen Seite vorzusehen.

Bei sämtlichen Ausführungsformen sind im Bereich der Fügezone vorgesehenen Materialien, beispielsweise Folien, Formen oder Textilien, die in Kontakt mit dem zu verschweißenden Material der Faserverbundbauteile stehen, vorzugsweise derart ausgeführt, dass sie sich auch nach Aufschmelzen und Abkühlen der thermoplastischen Matrix der zu fügenden Teile wieder davon ablösen lassen. Sie können dazu beispielsweise mit einem Trennmittel behandelt sein. Alternativ oder zusätzlich ist auch eine Ausführung aus einem nicht haftendenden Material oder eine entsprechende Beschichtung möglich.

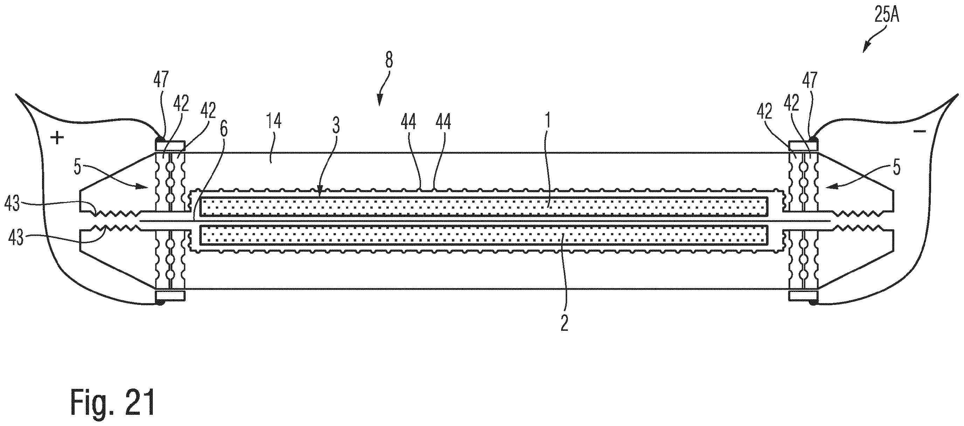

Fig. 21 zeigt eine Längsschnittansicht einer Vorrichtung 25A zum thermischen Fügen thermoplastischer Faserverbundbauteile 1, 2 gemäß einer weiteren Ausführungsform.

Diese Ausführungsform unterscheidet sich von der Ausführungsform nach Fig. 19 und 20 dadurch, dass der Schweißzusatzwerkstoff 6 hier nicht an den langen Seiten, sondern an den kurzen Seiten der jeweiligen längsseitigen Enden der Fügezone 3 kontaktiert ist. Dazu sind in gleicher Weise wie in Bezug auf Fig. 19 beschrieben in die Form 14 eingelassene leitende Elemente 42 vorgesehen, welche hier als Metallstäbe ausgebildet sind und die den Schweißzusatzwerkstoff 6 kontaktierenden Kontakte 5 bilden. Die Kontakte 5 sind mit einer ortsfeste Elektroden aufweisenden Schweißeinrichtung 47 gekoppelt.

Bei der dargestellten Ausführungsform sind die Kontakte 5 sowie die Elektroden der Schweißeinrichtung 47 sowohl an der Unterseite also an der Oberseite der Form 14 vorgesehen. In diesem Fall können die Metallstäbe gleichzeitig als Stabmagnete ausgebildet sein. Auf diese Weise wird eine sichere Kontaktierung des Schweißzusatzwerkstoffs 6 zwischen den oberen und unteren Kontakten 5 gewährleistet.

Bei weiteren Ausführungsformen können auch lediglich einseitige Kontakte 5 für jeden Pol vorgesehen sein, beispielsweise nur an der Oberseite 16 oder der Unterseite 17 der flexiblen Form 14 oder im Falle einer lediglich einseitig flexiblen Form 14 an der Oberseite.

Bei der dargestellten Ausführungsform wird die Druckbeaufschlagung mittels einer Vakuumanordnung 8 bereitgestellt. Ein Vakuum, welches über einen in der dargestellten Schnittansicht nicht sichtbaren Luftabsaugstutzen 8 angelegt wird, wirkt über die Kanäle 44 gleichmäßig über die gesamte Fügezone 3, welche mittels der Dichtlippen 43 luftdicht abgeschlossen ist.

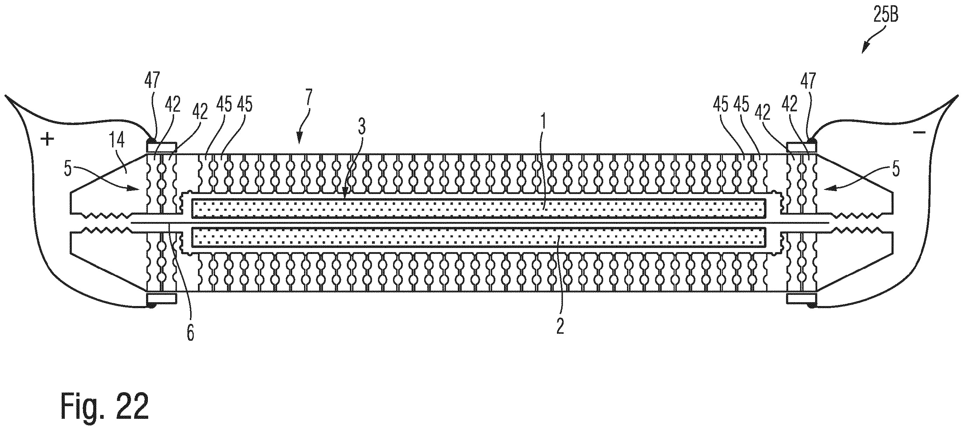

Fig. 22 zeigt eine Längsschnittansicht einer abgewandelten Vorrichtung 25B zum thermischen Fügen thermoplastischer Faserverbundbauteile.

Bei dieser Abwandlung weist die Druckbeaufschlagungsanordnung in der Fügezone 3 eine Magnetanordnung 7 mit einer Vielzahl von entlang der Fügezone 3 verteilten in die Form 14 eingelassenen Stabmagneten 45 auf, wie in Bezug auf Fig 19 näher erläutert.

Die Magnetanordnung 7 kann grundsätzliche alternativ oder zusätzlich zu einer Vakuumanordnung 8 gemäß Fig. 21 vorgesehen sein. In der dargestellten Ausführungsform ist die Magnetanordnung 7 zusätzlich zu der Vakuumanordnung 8 vorgesehen.

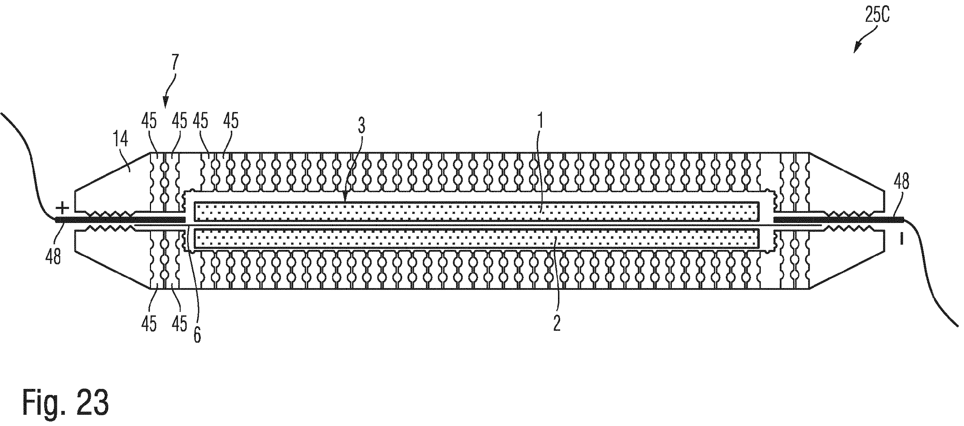

Fig. 23 zeigt eine Längsschnittansicht einer weiteren abgewandelten Vorrichtung 25C zum thermischen Fügen thermoplastischer Faserverbundbauteile.

Bei dieser Ausführungsform ist eine Schweißeinrichtung 48 mit sich auf Höhe der Fügezone 3 an den längsseitigen Enden der Fügezone 3 in die Form 14 bis direkt an den Schweißzusatzwerkstoff 6 erstreckenden stationären Elektroden vorgesehen. Die Elektroden werden hier mit der Magnetanordnung 7 in der Form 14 befestigt und zur sicheren Kontaktierung mit dem Schweißzusatzwerkstoff 6 verpresst.

Die Druckbeaufschlagungsanordnung 4 weist somit die Magnetanordnung 7 auf, welche hier beispielhaft wieder eine Vielzahl von Stabmagneten 45 umfasst. Bei weiteren Ausführungsformen können alternativ oder zusätzlich zu Stabmagneten auch Elektromagnete vorgesehen sein.

Zusätzlich ist auch hier eine Vakuumanordnung 8 wie in Bezug auf Fig. 21 beschrieben vorgesehen. Bei weiteren Ausführungsformen kann die Magnetanordnung 7 auch ohne eine Vakuumanordnung 8 vorgesehen sein.

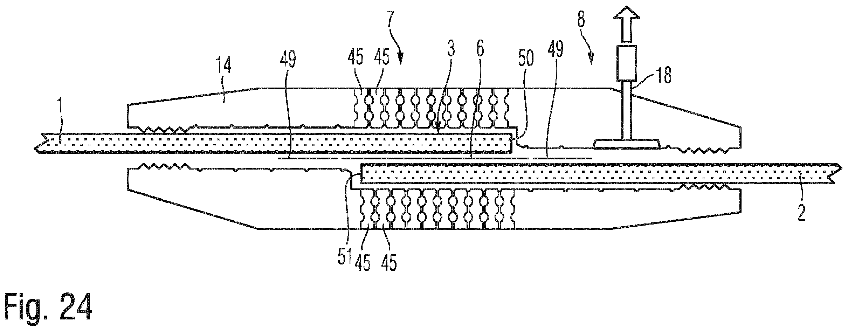

Fig. 24 zeigt eine Querschnittansicht einer Vorrichtung gemäß Fig. 22 oder Fig. 23.

In dieser Darstellung ist die Anordnung des Schweißzusatzwerkstoffs 6 im Überlapp der zu fügenden Faserverbundbauteile 1, 2 ersichtlich. Der Schweißzusatzwerkstoff 6 ist an den langen Seiten der Fügezone 3 über die Fügezone 3 bzw. über den Überlapp hinaus weitergeführt ausgebildet. Auf diese Weise wird ein Abkühlen der Fügezone 3 im Bereich der Bauteilkanten 50, 51vermieden. Somit wird ein Aufschmelzen an den Bauteilkanten 50, 51 und ein vollständiges Verschweißen gewährleistet.

Da die Bauteilkanten 50, 51 mit aufschmelzen ist im Anschluss an den über den Überlapp hinaus weitergeführten Schweißzusatzwerkstoff 6 jeweils ein Trennmittel 49 vorgesehen, welches einen definierten Abschluss des über die Fügezone 3 hinaus aufgeschmolzenen Bereichs schafft. Das Trennmittel 49 ist hier beispielhaft als ein Klebeband mit trennender Beschichtung ausgebildet.

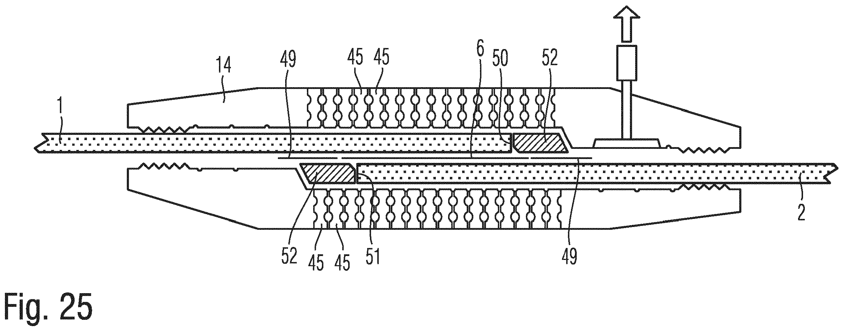

Fig. 25 zeigt eine Querschnittansicht einer nochmals abgewandelten Vorrichtung zum thermischen Fügen thermoplastischer Faserverbundbauteile.

Bei dieser Ausführungsform sind direkt in Anschluss an die Bauteilkanten 50, 51 elektrisch nicht leitfähige Hilfseinlagen 52 an beiden Seiten des Überlappstoßes zwischen den Faserverbundbauteilen 1, 2 und der Form 14 aufgebracht, welche bei der Druckbeaufschlagung mit verpresst werden. Der Schweißzusatzwerkstoff 6 ist dabei am Rand der Fügezone 3 teilweise über die Hilfseinlagen 52 geführt. Im Anschluss an den Schweißzusatzwerkstoff 6 sind auch hier Trennmittel 49 vorgesehen.

Die Hilfseinlagen 52 weisen eine gleiche thermische Leitfähigkeit wie der Werkstoff der Faserverbundbauteile 1,2 auf, sodass die Schweißwärme bis an die Bauteilkanten 50, 51 geführt wird. Somit schmelzen die Bauteilkanten 50, 51 mit auf und eine Geometrie des Schweißnahtabschlusses wird durch die Hilfseinlagen 52 definiert.

Die Hilfseinlagen 52 sind dazu vorzugsweise aus dem gleichen Werkstoff wie die Faserverbundbauteile gefertigt und lediglich mit einer nicht leitfähigen Folie oder Beschichtung umschlossen. Auf diese Weise wird eine gewünschte vollständige _Durchschweißung der Bauteilkanten 50, 51 mit vorbestimmter Geometrie ermöglicht.

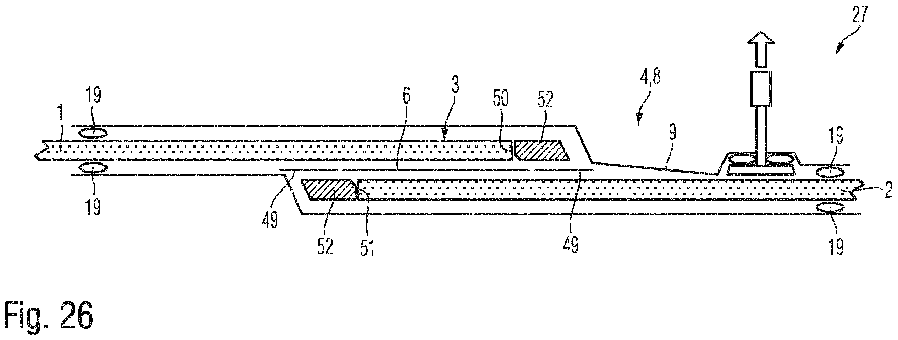

Fig. 26 zeigt eine Querschnittansicht einer Vorrichtung 27 zum thermischen Fügen thermoplastischer Faserverbundbauteile gemäß einer noch weiteren Ausführungsform.

Bei dieser Ausführungsform ist im Vergleich zu Fig. 25 die Anordnung des Schweißzusatzwerkstoffes 6 sowie der Hilfseinlagen 52 im Bereich der Fügezone 3 gleich.

Die Vorrichtung 27 unterscheidet sich jedoch maßgeblich durch die Art der Abdeckung der Druckbeaufschlagungsanordnung 4, welche hier nicht mit einer flexiblen Form 14 sondern mit einer Vakuummembran 9 wie in Bezug auf Fig. 12 und 13 beschreiben gebildet ist. Die Kontakte 5 sind dabei an den längsseitigen Enden der Fügezone 3 vorgesehen und können beispielsweise in der in Bezug auf Fig. 12 oder 13 beschriebenen Weise ausgebildet sein.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

Insbesondere sind folgende weitere Ausführungsformen vorgesehen:
In einem Beispiel des Verfahrens zum thermischen Verschweißen von thermoplastischen Faserverbundkunststoffen ist vorgesehen, dass die beiden zu verbindenden Fügepartner während des Schweißvorganges zumindest im Schweißbereich von einem Vakuumaufbau luftdicht (bzw. annähernd luftdicht) umschlossen sind, wobei dieser Bereich durch Verwendung einer Vakuumpumpe bzw. Unterdruckpumpe derart von Luft evakuiert wird, wobei dort ein Vakuum oder zumindest ein Druck geringer als der Umgebungsdruck vorherrscht, so dass die für die Schweißung notwendige Verpressung der Fügepartner durch die Druckdifferenz zwischen Umgebungsdruck und dem Innendruck im Vakuumaufbau erfolgt.

In einer Weiterbildung ist vorgesehen, dass die für die Verschweißung erforderliche Wärmeenergie durch Verwendung von Laserenergie oder elektrischer Induktion oder Ultraschall eingebracht wird (siehe Fig. 9 und Fig.10).

In einer dazu alternativen Weiterbildung ist vorgesehen, dass die für die Verschweißung erforderliche Wärmeenergie mittels Stromfluss durch die Fügepartner selbst (siehe Fig.1 bis 8 und 14 bis 17) oder durch einen Zusatzwerkstoff (siehe Fig.11 bis 13 und 18, 19) eingebracht wird.

In einer Weiterbildung hierzu ist vorgesehen, dass im Bereich der Stromeinleitung die im sonstigen Bereich verwendete Vakuumfolie (bzw. anderweitige Vakuumbarriere, z.B. eine Silikonform) lokal durch eine elektrisch leitfähiges Medium (z.B. eine Metallfolie, Metallstücke oder ein elektrisch leitfähiges annähernd luftdichtes Textil) ersetzt wird, wobei die Vakuumfolie (bzw. Vakuumbarriere) und das elektrisch leitfähige Medium (z.B. Folie bzw. Textil) derart verbunden werden (z.B. durch ein Klebeband), dass die (annähernde) Vakuumdichtheit des Vakuumaufbaus weiterhin gewährleistet ist.

In einer Weiterbildung hierzu ist vorgesehen, dass der für die für Stromeinleitung vorgesehene Bereich in Segmente aus elektrisch leitfähigem Medium (z.B. Metallstücke, Folie oder Textil) unterteilt ist, wobei sich die (Metallstück- Folien- bzw. Textil-) Segmente nicht direkt berühren, sondern durch ein nicht elektrisch leitfähiges Zwischenmaterial untereinander (annähernd) luftdicht verbunden sind, sodass ein Stromfluss aus einer Elektrode, die ein Segment berührt, zwar in Dickenrichtung in das zu verschweißende Material oder den Zusatzwerkstoff fließen kann, der Stromfluss sich aber nicht seitlich in bzw. über andere Segmente verteilen kann.

In einem Beispiel ist ein luftdichtes oder annähernd luftdichtes Medium (z.B. Silikonform, Folie oder Textil) vorgesehen, wobei dieses eine signifikante elektrische Leitfähigkeit ausschließlich in Dickenrichtung aufweist, in Richtungen parallel zur Fläche (z.B. der Silikonform, der Folie bzw. des Textils) jedoch keine signifikante elektrische Leitfähigkeit aufweist.

In einem anderen Beispiel ist ein semipermeables Medium (z.B. Silikonform, Folie oder Textil) vorgesehen, welches für Luft durchlässig, für den angeschmolzenen bzw. verflüssigten Matrixwerkstoff der Fügepartner jedoch (nahezu) impermeabel ist und eine signifikante elektrische Leitfähigkeit ausschließlich in Dickenrichtung aufweist, in Richtungen parallel zur Fläche (z.B. der Silikonform, der Folie bzw. des Textils) jedoch keine signifikante elektrische Leitfähigkeit aufweist.

In einer Weiterbildung ist vorgesehen, dass die Form, die Folie bzw. das Textil aus einem Multimaterialmix aus leitfähigen und nicht leitfähigen Materialien besteht, z.B. aus in Kunststofffolie eingebettete Metallpartikel, in Silikon eingebettet Metallstäbchen oder in ein Kunststofffasertextil eingebrachte Metallfäden, die die beiden Oberflächen der Form, der Folie oder des Textils berühren, sich aber in Flächenrichtung nicht oder nur gelegentlich gegenseitig berühren.

In einer Weiterbildung des Verfahrens ist vorgesehen, dass für den gesamten Vakuumaufbau oder die lokalen Einsätze im Vakuumaufbau eine Form, eine Folie bzw. ein annähernd luftdichtes Textil verwendet wird (siehe Fig. 5, 6 und 7), bei dem dieses eine signifikante elektrische Leitfähigkeit ausschließlich in Dickenrichtung aufweist und in Richtungen parallel zur Fläche (z.B. der Silikonform, der Folie bzw. des Textils) jedoch keine signifikante elektrische Leitfähigkeit aufweist, oder bei dem die Form, die Folie bzw. das Textil aus einem Multimaterialmix aus leitfähigen und nicht leitfähigen Materialien besteht, z.B. aus in Kunststofffolie eingebettete Metallpartikel, in Silikon eingebettet Metallstäbchen oder in ein Kunststofffasertextil eingebrachte Metallfäden, die die beiden Oberflächen der Form, der Folie oder des Textils berühren, sich aber in Flächenrichtung nicht oder nur gelegentlich gegenseitig berühren.

In einer Weiterbildung des Verfahrens ist vorgesehen, dass die Elektroden bzw. die anderweitigen Energiequellen zur Wärmeeinbringung während des Schweißvorgangs entlang der Schweißnaht bewegt werden.

In einer Weiterbildung hierzu ist vorgesehen, dass bei Verwendung von Bestromung mit Elektroden die Elektroden Rollen oder Bürsten aufweisen, die für eine bewegte Kontaktierung optimiert sind.

In einer Weiterbildung hierzu ist wiederum vorgesehen, dass zur Verbesserung der Kontaktierung zwischen Elektroden und dem elektrisch leitfähigen Medium des Vakuumsacks eine elektrisch leitfähige Paste vorgesehen wird.

In einer Weiterbildung des Verfahrens ist vorgesehen, dass ein innerer Vakuumsack aus einem semipermeablen Medium (luftdurchlässig, aber impermeabel für Matrixwerkstoff der Fügepartner) besteht, ggf. z.B. Silikonform, Folie oder Textil, welches für Luft durchlässig, für den angeschmolzenen bzw. verflüssigten Matrixwerkstoff der Fügepartner jedoch (nahezu) impermeabel ist und eine signifikante elektrische Leitfähigkeit ausschließlich in Dickenrichtung aufweist, in Richtungen parallel zur Fläche (z.B. der Silikonform, der Folie bzw. des Textils) jedoch keine signifikante elektrische Leitfähigkeit aufweist (bei Widerstandsschweißen) und ein äußerer Vakuumsack aus einem (nahezu) luftundurchlässigen Medium besteht, ggf. z.B. ein luftdichtes oder annähernd luftdichtes Medium (z.B. Silikonform, Folie oder Textil), wobei dieses eine signifikante elektrische Leitfähigkeit ausschließlich in Dickenrichtung aufweist, in Richtungen parallel zur Fläche (z.B. der Silikonform, der Folie bzw. des Textils) jedoch keine signifikante elektrische Leitfähigkeit aufweist (bei Widerstandsschweißen).

Dieses Beispiel beschreibt die Verwendung einer semipermeablen Membran in Verbindung mit einem äußeren luftdichten Vakuumsack als Vakuumanordnung. Vorteilhaft können damit beim Schweißprozess freigesetzte Gase leichter abgesaugt werden. Somit wird eine Porosität im Schweißbereich vermieden bzw. reduziert. Bei der Verwendung von Widerstandsschweißen sind beide Vakuumsäcke zusätzlich auch durchlässig für Strom ausgebildet.

In einem Beispiel ist vorgesehen, dass die beiden zu verbindenden Fügepartner während des Schweißvorganges zumindest im Schweißbereich durch magnetische Kräfte verpresst werden, z.B. durch beidseitige Positionierung von sich gegenseitig anziehenden Magneten, oder durch einseitige Positionierung von Magneten und einem magnetisierbaren Medium auf der anderen Seite.

Für dieses Beispiel können sowohl Permanentmagnete als auch Elektromagnete verwendet werden.

In einem Beispiel wird ein Stromfluss durch die Magnete selbst hindurch eingeleitet.

Der Vakuumaufbau kann entweder beidseitig aus Folie bzw. Textil bzw. einer flexiblen Form bestehen, oder nur auf einer Seite aus einem dieser und auf der anderen Seite aus einer festen Form.

Die Verwendung von Folienaufbauten ist eher für Kleinserien und Prototypen praktikabel, für Serienanwendungen mit immer gleichen Formteilen ist die Verwendung einer dafür angefertigten flexiblen Form zeitsparender.

Das Verfahren kann für Punktschweißungen verwendet werden, vorzugsweise werden die Elektroden aber linienförmig entlang einer Schweißnaht bewegt. Vorteilhaft liegt der Kompressionsdruck durch das Vakuum auch nach dem Weiterwandern der Elektroden während der Abkühlphase noch an. Alternativ kann es auch für Linienschweißungen mittels Zusatzwerkstoff dienen (siehe Fig. 11, 12 und 26), bei denen auch die Elektroden nicht bewegt werden, sondern nur an beiden Enden anliegen. Hier hat das Vakuum- bzw. Magnetschweißverfahren den Vorteil, dass der Druck gleichmäßig verteilt über die ganze Linie aufgebracht werden kann, ohne von beiden Seite große, teure und sehr passgenaue Formen zu verwenden.

Die verwendeten Folien, Formen bzw. Textilien, die in Kontakt mit dem zu verschweißenden Material stehen, sind vorzugsweise derart ausgeführt, dass sie sich auch nach Aufschmelzen und Abkühlen der Matrix der zu fügenden Teile wieder davon ablösen lassen. Sie könnten z.B. mit einem Trennmittel behandelt sein, oder aus einem nicht haftendenden Material sein.

Fig. 8 beschreibt die Verwendung einer semipermeablen Membran in Verbindung mit einem äußeren luftdichten Vakuumsack als Vakuumanordnung. Vorteilhaft können damit beim Schweißprozess freigesetzte Gase leichter abgesaugt werden.

Somit wird eine Porosität im Schweißbereich vermieden bzw. reduziert. Bei der Verwendung von Widerstandsschweißen sind beide Vakuumsäcke zusätzlich auch durchlässig für Strom ausgebildet.

Die in den Figuren gezeigten Hilfseinlagen 37 (Schweißhilfseinlagen) erleichtern das Erstellen der Vakuumanordnung 8 dahingehend, dass damit im Bereich der Klebebänder keine Falten entstehen, um die luftdichte Verbindung zu erleichtern. Die Hilfseinlagen können entweder aus nichtleitendem Material oder aus in nicht leitfähige Folie eingeschlagenem oder nicht leitfähig beschichteten leitfähigen Material gebildet sein.

Die Hilfseinlagen bestehen aus einem Material mit genügend hoher Schmelztemperatur, so dass sie beim Schweißprozess nicht aufschmelzen. Dies gilt auch für die verwendeten Folien, Formen und Textilien.

### Bezugszeichenliste

- 1: Faserverbundbauteil
- 2: Faserverbundbauteil
- 3: Fügezone
- 4: Druckbeaufschlagungsanordnung
- 5: elektrischer Kontakt
- 5a, 5b, 5c, ..., 5n: Kontaktabschnitte
- 6: Schweißzusatzwerkstoff
- 7: Magnetanordnung
- 8: Vakuumanordnung
- 9: Vakuummembran
- 10: Laserstrahl
- 11: Membran
- 12: zweite Schicht
- 13: erste Schicht
- 14: Form
- 15: Hauptflächenausdehnungsrichtung
- 16: Oberteil
- 17: Unterteil
- 18: Absaugstutzen
- 19: Dichtelement
- 20: Vorrichtung
- 21: Vorrichtung
- 22: Vorrichtung
- 23: Vorrichtung
- 24A; 24B; 24C: Vorrichtung
- 25A; 25B; 25C: Vorrichtung
- 26A; 26B: Vorrichtung
- 27: Vorrichtung
- 28: Vorrichtung
- 29: Vorrichtung
- 30: Vorrichtung
- 31: Schweißeinrichtung
- 32: Schweißeinrichtung
- 33: Schweißeinrichtung
- 34: Schweißeinrichtung
- 35: Schweißeinrichtung
- 36: Klebeband
- 37: Hilfseinlagen
- 38: Überlappbereich
- 39: Kühlfluidquelle
- 40: Kühlfluid
- 41: Isolationselement
- 42: leitendes Element
- 43: Dichtlippe
- 44: Vakuumkanal
- 45: Stabmagnet
- 46: Schweißeinrichtung
- 47: Schweißeinrichtung
- 48: Schweißeinrichtung
- 49: Trennmittel
- 50: Bauteilkante
- 51: Bauteilkante
- 52: Hilfseinlagen

## Patentansprüche

1. Verfahren zum thermischen Fügen thermoplastischer Faserverbundbauteile (1, 2), mit den folgenden Verfahrensschritten:
Gemeinsames Abdecken zu fügender thermoplastischer Faserverbundbauteile (1, 2) zumindest im Bereich einer Fügezone (3) mit einer zumindest abschnittsweise flexiblen Druckbeaufschlagungsanordnung (4);
flächiges Druckbeaufschlagen der zu fügenden thermoplastischen Faserverbundbauteile (1, 2) mit der Druckbeaufschlagungsanordnung (4), so dass die Faserverbundbauteile (1, 2) zumindest in der Fügezone (3) aneinander gedrückt werden;
Verschweißen der Faserverbundbauteile (1, 2) in der Fügezone (3) während der Druckbeaufschlagung; und
Aufrechterhalten der Druckbeaufschlagung mit der Druckbeaufschlagungsanordnung (4) bis zum Erstarren der Fügezone (3),
wobei die Druckbeaufschlagungsanordnung (4) elektrische Kontakte (5) enthält und die Faserverbundbauteile (1, 2) mittels Widerstandsschweißen über die elektrischen Kontakte verschweißt werden, und
wobei die elektrischen Kontakte (5) in voneinander isolierte Kontaktabschnitte (5a, 5b, 5c, ..., 5n) unterteilt sind, wobei ein Schweißstrom an beiden Seiten der Fügezone (3) an jeweils gegenüberliegenden Kontaktabschnitten (5a, 5a'; 5b, 5b; 5c, 5c'; 5n, 5n') angelegt wird und das Verschweißen der Faserverbundbauteile (1, 2) mittels eines Stromflusses in Dickenrichtung (D) durch die Faserverbundbauteile (1, 2) vorgenommen wird.

2. Verfahren nach Anspruch 1, wobei die elektrischen Kontakte (5) entlang der Fügezone (3) angeordnet sind und das Verschweißen kontinuierlich oder abschnittsweise entlang der Fügezone durch lokales Anlegen eines Schweißstroms an die Kontakte (5) vorgenommen wird.

3. Verfahren nach Anspruch 1, wobei ein leitfähiger Schweißzusatzwerkstoff (6) zwischen die zu fügenden thermoplastischer Faserverbundbauteile (1, 2) in der Fügezone (3) eingebracht und mit den elektrischen Kontakten (5) verbunden wird, wobei das Verschweißen durch Anlegen eines Schweißstroms an den Schweißzusatzwerkstoff (6) vorgenommen wird.

4. Verfahren nach einem der vorangehenden Ansprüche, wobei die Druckbeaufschlagungsanordnung (4) als Magnetanordnung (7) vorgesehen wird und das Druckbeaufschlagen das Anlegen magnetischer Kräfte umfasst.

5. Verfahren nach einem der vorangehenden Ansprüche, wobei die Druckbeaufschlagungsanordnung (4) als Vakuumanordnung (8) vorgesehen wird und das Druckbeaufschlagen das Anlegen eines Unterdrucks umfasst.

6. Verfahren nach Anspruch 5, wobei die Vakuumanordnung (8) eine flexible Vakuummembran (9) aufweist, welche eine Oberseite und/oder eine Unterseite der zu fügenden Faserverbundbauteile (1, 2) abdeckt, wobei das gemeinsame Abdecken der zu fügenden Faserverbundbauteile (1,2 ) mit der Vakuumanordnung (8) ein Aufbringen zumindest eines elektrisch leitenden Elements als elektrischen Kontakt (5) in der Fügezone (3) umfasst, mit welchem die Vakuummembran (9) luftdicht verbunden wird, wobei insbesondere eine Mehrzahl elektrisch leitender Elemente als Kontaktabschnitte (5a, 5b, 5c, ..., 5n) vorgesehen wird, welche jeweils voneinander elektrisch getrennt und luftdicht verbunden werden.

7. Verfahren nach Anspruch 5, wobei die Faserverbundbauteile (1, 2) durch von außerhalb der Vakuumanordnung erregter Induktion verschweißt werden, insbesondere unter Kühlung der Vakuumanordnung (8), und/oder wobei die Faserverbundbauteile (1, 2) durch von außerhalb der Vakuumanordnung erregtem und über die Vakuumanordnung (8) übertragenen Ultraschall verschweißt werden und/oder wobei die Vakuumanordnung (8) für eine vorbestimmte Laserstrahlung transparent vorgesehen wird und die Faserverbundbauteile (1, 2), insbesondere unter Kühlung der Vakuumanordnung (8), mittels eines von außerhalb der Vakuumanordnung (8) eingebrachten Laserstrahls (10) verschweißt werden.

8. Vorrichtung (20; 21; 22; 23; 24A; 24B; 24C; 25A; 25B; 25C; 26A; 26B ; 27; 28; 29; 30) zum thermischen Fügen thermoplastischer Faserverbundbauteile (1, 2) gemäß einem Verfahren nach einem der Ansprüche 1 bis 7, mit einer zumindest abschnittsweise flexiblen Druckbeaufschlagungsanordnung (4) zum gemeinsamen Abdecken zu fügender thermoplastischer Faserverbundbauteile (1, 2) zumindest im Bereich einer Fügezone (3) und Druckbeaufschlagen der zu fügenden thermoplastischen Faserverbundbauteile (1,2), so dass die zu fügenden Faserverbundbauteile (1, 2) zumindest in der Fügezone (3) aneinander gedrückt werden; und
einer Schweißeinrichtung (31; 32; 33; 34; 35; 46; 47; 48) zum Verschweißen der Faserverbundbauteile in der Fügezone, wobei die Druckbeaufschlagungsanordnung (4) und die Schweißeinrichtung (31; 32; 33; 34; 35; 46; 47; 48) derart ausgebildet sind, dass die thermoplastischen Faserverbundbauteile in der Fügezone in einem druckbeaufschlagten Zustand verschweißbar und die Druckbeaufschlagung unabhängig von der Schweißeinrichtung mit der Druckbeaufschlagungsanordnung (4) bis zum Erstarren der Fügezone aufrechterhaltbar ist,
wobei die Druckbeaufschlagungsanordnung (4) elektrische Kontakte (5) enthält und die Faserverbundbauteile (1, 2) mittels Widerstandsschweißen über die elektrischen Kontakte verschweißbar sind, und
wobei die elektrischen Kontakte (5) in voneinander isolierte Kontaktabschnitte (5a, 5b, 5c, ..., 5n) unterteilt sind, wobei ein Schweißstrom an beiden Seiten der Fügezone (3) an jeweils gegenüberliegenden Kontaktabschnitten (5a, 5a'; 5b, 5b; 5c, 5c'; 5n, 5n') anlegbar und das Verschweißen der Faserverbundbauteile (1, 2) mittels eines Stromflusses in Dickenrichtung (D) durch die Faserverbundbauteile (1, 2) vornehmbar ist.

## Claims

1. A method for thermally joining thermoplastic fiber composite components (1, 2), comprising the following steps:
jointly covering thermoplastic fiber composite components (1, 2) to be joined, at least in a region of a joining zone (3), with a pressurization arrangement (4), which is flexible, at least in some section or sections;
extensive pressurization of thermoplastic fiber composite components (1, 2) to be joined by the pressurization arrangement (4), with a result that the fiber composite components (1, 2) are pressed against one another, at least in the joining zone;
welding the fiber composite components (1, 2) in the joining zone (3) during pressurization; and
maintaining the pressurization by the pressurization arrangement (4) until the joining zone (3) solidifies;
wherein the pressurization arrangement (4) contains electric contacts (5) and the fiber composite components (1, 2) are welded by resistance welding via the electric contacts, and
wherein the electric contacts (5) are divided in mutually isolated contact sections (5a, 5b, 5c, ..., 5n), wherein a welding current is applied to both sides of the joining zone (3) in respectively opposite contact sections (5a, 5a'; 5b, 5b; 5c, 5c'; 5n, 5n') and the welding of the fiber composite components (1, 2) is performed by a current flow in the thickness direction (D) through the fiber composite components (1, 2).

2. The method according to claim 1, wherein the electric contacts (5) are arranged along the joining zone (3) and welding is performed continuously or in sections along the joining zone by local application of a welding current to the electrical contacts (5).

3. The method according to claim 1, wherein a conductive welding filler material (6) is introduced between thermoplastic fiber composite components (1, 2) to be joined in the joining zone (3) and is connected to the electric contacts (5), wherein welding is performed by applying a welding current to the welding filler material (6).

4. The method according to one of the preceding claims, wherein the pressurization arrangement (4) comprises a magnet arrangement (7) and pressurization comprises applying magnetic forces.

5. The method according to one of the preceding claims, wherein the pressurization arrangement (4) is provided as a vacuum arrangement (8) and the pressurization comprises applying a vacuum.

6. The method according to claim 5, wherein the vacuum arrangement (8) has a flexible vacuum diaphragm (9), which covers a top side and/or a bottom side of the fiber composite components (1, 2) to be joined, wherein the joint covering, by the vacuum arrangement (8), of the fiber composite components (1, 2) to be joined comprises applying at least one electrically conductive element as an electric contact (5) in the joining zone (3), to which element the vacuum diaphragm (9) is connected in an airtight manner, wherein in particular a plurality of electrically conductive elements is provided as contact sections (5a, 5b, 5c, ..., 5n), which are each separated electrically from one another and connected in an airtight manner.

7. The method according to claim 5, wherein the fiber composite components (1,2) are welded by induction excited from outside the vacuum arrangement (8) by a process comprising cooling the vacuum arrangement (8), and/or wherein the fiber composite components (1,2) are welded by ultrasound excited outside the vacuum arrangement (8) and transmitted via the vacuum arrangement (8), and/or wherein the vacuum arrangement (8) is transparent for a predetermined laser radiation and the fiber composite components are welded by a laser beam (10) introduced from outside the vacuum arrangement by a process comprising cooling the vacuum arrangement (8).

8. An apparatus (20; 21; 22; 23; 24A; 24B; 24C; 25A; 25B; 25C; 26A; 26B; 27; 28; 29; 30) for thermally joining thermoplastic fiber composite components (1,2) according to a method of one of the claims 1 to 7, having a pressurization arrangement (4) being flexible, at least in some section or sections, for jointly covering, at least in a region of a joining zone (3), thermoplastic fiber composite components (1,2) to be joined and applying pressure to the thermoplastic fiber composite components (1,2) to press the thermoplastic fiber composite components (1,2) against one another, at least in the joining zone (3); and
a welding device (31; 32; 33; 34; 35; 46; 47; 48) configured for welding the fiber composite components in the joining zone, wherein the pressurization arrangement (4) and the welding device (31; 32; 33; 34; 35; 46; 47; 48) are configured to weld the thermoplastic fiber composite components in a pressurized state in the joining zone, and the pressurization is maintained independently of the welding device with the pressurization arrangement (4) until the joining zone solidifies,
wherein the pressurization arrangement (4) contains electric contacts (5), and the fiber composite components (1,2) are configured to be welded by resistance welding via the electric contacts, und
wherein the electric contacts (5) are divided in mutually isolated contact sections (5a, 5b, 5c, ..., 5n), wherein a welding current is applied to both sides of the joining zone (3) in respectively opposite contact sections (5a, 5a'; 5b, 5b; 5c, 5c'; 5n, 5n') and the welding of the fiber composite components (1, 2) is performed by a current flow in the thickness direction (D) through the fiber composite components (1, 2).

## Revendications

1. Procédé pour l'assemblage thermique de composants composites thermoplastiques à fibres (1, 2) à assembler, comprenant les étapes suivantes :
Couverture commune de composants composites thermoplastiques à fibres (1, 2) au moins dans la région d'une zone d'assemblage (3) avec un dispositif de pressurisation (4) au moins partiellement flexible ;
mise en pression à plat des composants composites thermoplastiques à fibres (1, 2) avec le dispositif de pressurisation (4), de sorte que les composants composites thermoplastiques à fibres (1, 2) à assembler sont pressés l'un contre l'autre au moins dans la zone d'assemblage (3) ;
soudage des composants composites thermoplastiques à fibres (1, 2) à assembler dans la zone d'assemblage (3) pendant la mise sous pression; et
maintien de la mise sous pression avec le dispositif de pressurisation (4) jusqu'à la solidification de la zone d'assemblage (3),
dans lequel le dispositif de pressurisation (4) contenant des contacts électriques (5) et les composants composites thermoplastiques à fibres (1, 2) étant soudés par soudage par résistance par l'intermédiaire des contacts électriques, et
dans lequel les contacts électriques (5) étant divisés en sections de contact (5a, 5b, 5c, ,. 5n) isolées les unes des autres, dans lequel un courant de soudage étant appliqué des deux côtés de la section de contact de la zone d'assemblage (3) est appliqué à des sections de contact (5a, 5a' ; 5b, 5b ; 5c, 5c' ; 5n, 5n') respectivement opposées, et le soudage des composants composites thermoplastiques à fibres (1, 2) est effectué au moyen d'un flux de courant dans le sens de l'épaisseur (D) à travers les composants composites thermoplastiques à fibres (1, 2).

2. Procédé selon la revendication 1, dans lequel les contacts électriques (5) sont disposés le long de la zone d'assemblage (3) et le soudage est réalisé en continu ou par tronçons le long de la zone d'assemblage en appliquant localement un courant de soudage aux contacts (5).

3. Procédé selon la revendication 1, dans lequel un matériau d'apport de soudage conducteur (6) est placé entre les composants composites thermoplastiques à fibres (1, 2) à assembler dans la zone d'assemblage (3) et est relié aux contacts électriques (5), dans lequel le soudage étant effectué en appliquant un courant de matériau d'apport de soudage conducteur (6).

4. Procédé selon l'une des revendications précédentes, dans lequel le dispositif de pressurisation (4) est prévu sous la forme d'un dispositif magnétique (7) et la mise sous pression comprend l'application de forces magnétiques.

5. Procédé selon l'une des revendications précédentes, dans lequel le dispositif de pressurisation (4) est prévu sous forme de dispositif à vide (8) et la mise sous pression comprend l'application d'une dépression.

6. Procédé selon la revendication 5, dans lequel le dispositif à vide (8) présente une membrane à vide flexible (9) qui recouvre une face supérieure et/ou une face inférieure des composants composites thermoplastiques à fibres (1, 2) à assembler, dans lequel le couverture commune des composants composites thermoplastiques à fibres (1, 2) à assembler avec le dispositif à vide (8) comprend une application d'au moins un élément électriquement conducteur en tant que contact électrique (5) dans la zone d'assemblage (3), avec lequel la membrane à vide (9) est reliée de manière étanche à l'air, dans lequel une pluralité d'éléments électriquement conducteurs étant notamment prévue comme sections de contact (5a, 5b, 5c, ..., 5n), qui sont respectivement séparées électriquement les unes des autres et reliées de manière étanche à l'air.

7. Procédé selon la revendication 5, dans lequel les composants composites thermoplastiques à fibres (1, 2) étant soudés par induction excitée depuis l'extérieur de le dispositif à vide, en particulier avec refroidissement de le dispositif à vide (8), et/ou les composants composites thermoplastiques à fibres (1, 2) étant soudés par ultrasons excités depuis l'extérieur de le dispositif à vide et transmis via le dispositif à vide (8) et/ou dans lequel le dispositif à vide (8) étant prévu transparent pour un rayonnement laser prédéterminé et les composants composites en fibres (1, 2) étant soudés, en particulier avec refroidissement de le dispositif à vide (8), au moyen d'un rayon laser (10) introduit depuis l'extérieur de le dispositif à vide (8).

8. Dispositif (20 ; 21 ; 22 ; 23 ; 24A; 24B ; 24C ; 25A ; 25B ; 25C ; 26A; 26B ; 27 ; 28 ; 29 ; 30) pour l'assemblage thermique de composants composites thermoplastiques à fibres (1, 2) selon un procédé selon l'une des revendications 1 à 7, avec
un dispositif de pressurisation (4) flexible au moins par sections pour couverture commune des composants composites thermoplastiques à fibres (1, 2) à assembler au moins dans la région d'une zone d'assemblage (3) et mettre sous pression des composants composites thermoplastiques à fibres (1, 2) à assembler, de sorte que les composants composites thermoplastiques à fibres (1, 2) à assembler sont pressés l'un contre l'autre au moins dans la zone d'assemblage (3); et
un dispositif de soudage (31 ; 32 ; 33 ; 34 ; 35 ; 46 ; 47 ; 48) pour souder les composants composites thermoplastiques à fibres dans la zone d'assemblage, dans lequel le dispositif de pressurisation (4) et le dispositif de soudage (31 ; 32 ; 33 ; 34 ; 35 ; 46 ; 47 ; 48) sont conçus de telle sorte que les composants composites thermoplastiques à fibres peuvent être soudés dans la zone d'assemblage dans un état alimenté en pression et que l'alimentation en pression peut être maintenue indépendamment du dispositif de soudage avec dispositif de pressurisation (4) jusqu'à la solidification de la zone d'assemblage,
dans lequel le dispositif de pressurisation (4) contient des contacts électriques (5) et les composants composites thermoplastiques à fibres (1, 2) peuvent être soudés par résistance par l'intermédiaire des contacts électriques, et
dans lequel les contacts électriques (5) étant divisés en sections de contact (5a, 5b, 5c, ,... 5n) isolées les unes des autres, dans lequel un courant de soudage être appliqué des deux côtés de la zone d'assemblage (3) sur des sections de contact (5a, 5a' ; 5b, 5b ; 5c, 5c' ; 5n, 5n') respectivement opposées, et le soudage des composants composites thermoplastiques à fibres (1, 2) pouvant être effectué au moyen d'un flux de courant dans la direction de l'épaisseur (D) à travers les composants composites thermoplastiques à fibres (1, 2).
